# EUROPEAN PATENT SPECIFICATION

(11) **EP 1 292 443 B1**
(45) Date of publication and mention of the grant of the patent: **02.05.2007**
(21) Application number: 01939308.1
(22) Date of filing: 22.05.2001
(51) Int. Cl.: B32B 3/02, B32B 3/06, B32B 3/08, B32B 3/10, B42D 15/00, B65D 65/28, G09F 3/00, G09F 3/10

(54) **COMPACT DISC LABEL CONSTRUCTION**
ETIKETTENKONSTRUKTION FÜR COMPACT DISCS
CONSTRUCTION D'ETIQUETTE DE DISQUE COMPACT

(30) Priority: 22.05.2000 US 575396; 13.11.2000 US 248147 P; 11.04.2001 US 283062 P
(43) Date of publication of application: 19.03.2003
(73) Proprietor: AVERY DENNISON CORPORATION, Pasadena, CA 91103 (US)
(72) Inventor: HODSDON, Jerry, G., MA 02644 (US); TAW, Daisy, S., CA 91780 (US); DO, Sung, Fullerton, CA 92831 (US); Banks, Donald, E., CA 92648 (US)
(74) Representative: Hallam, Arnold Vincent
(86) International application number: PCT/US2001/016648
(87) International publication number: WO 2001/089821

(56) References cited:
- EP-A- 0 418 608
- WO-A-98/29313
- DE-U1- 29 800 751
- US-A- 4 584 219
- US-A- 5 484 168
- US-A- 5 799 982
- US-A- 5 958 536
- US-A- 6 054 009

## Description

### BACKGROUND OF THE INVENTION

The present invention relates to label sheet constructions and particularly those having labels designed for application to compact discs. It more particularly relates to such labels that are cut in a facestock sheet that is releasably adhered to a liner sheet to form a label sheet. The label sheet is adapted to be fed into a printer or copier and the desired indicia printed on the labels, and the printed labels peeled off of the liner sheet to be applied to a compact disc, either directly or using an alignment apparatus. The present invention also relates to sheet constructions, systems and methods for applying labels to tabs of divider sheets, to tabs of file folders, to envelopes and the like.

Commercially successful compact disc label sheets are currently available from Avery Dennison Corporation of Pasadena, California, as well as other manufacturers. After the labels have been printed, they must be removed from the sheet prior to application to the compact discs or the like. Removal of the labels exposes the adhesive side of the label which must be handled in order to place the label either directly onto the compact disc or in an apparatus designed to align the labels concentrically with the compact disc. Handling of the adhesive side of the label can result in a loss of adhesive tack due to contamination in the area where it was handled, contributing to poor adhesion to the compact disc in the contaminated area. Additionally, adhesion of the label to the user's fingers can increase the level of dexterity required to accurately place the label in its desired location.

One known label application method and system is provided in the INDEX MAKER Clear Label Dividers product available from Avery Dennison Corporation of Pasadena, California. This product includes a sheet having columns of clear labels thereon attached with adhesive to a releasable liner sheet. The clear tab labels are formatted using preset layouts and existing word processing software. The tab titles are printed onto the clear label sheet using laser or inkjet printers. The printed tabs are then manually peeled off from the sheet and individually applied to the divider tabs. This system allows the user to individually custom design and print each of the tabs with the desired indicia. The clear labels virtually disappear on the divider tabs giving the dividers a clean, professional look. Formatting can use preset layouts and existing software programs such as MICROSOFT Word for Windows, COREL Word Perfect for Windows, COREL Word Perfect for DOS, LOTUS Word Pro, and LOTUS AMI Pro. The following US Patents are related to this prior art product: US Patent Nos. 5,135,261, 5,340,427 and 5,389,414. Application of these labels can be time consuming, clumsy and subject to error, since they must be separated and then attached individually to the corresponding divider tabs. In the process of individually applying them, they often are not applied evenly or properly with the divider tab sheets. In other words, the above-described INDEX MAKER product has the problem that the labels are difficult and time consuming to remove from the backing sheet and to place and align on the tabs so they are straight. They are also small and cumbersome to handle.

Accordingly, a method for remedying these problems was designed and provided in U. S. Patent No. 5,947,525 to Pollman. The Pollman patent teaches using at least one set of precut labels removably attached to carrier strips that are removably secured to a backing sheet.

The precut labels are spaced apart on the carrier strips to align substantially on the tabs on the divider sheets. The user can separate a carrier strip and precut labels affixed thereto from the packing sheet, place and align the carrier strip across the divider sheet such that the precut labels are placed on the tabs of the divider sheets. He then pulls the carrier sheet upwardly and away from the divider sheet such that the precut labels separate from the carrier strip and remain on the divider's tabs. This system, while an improvement in certain respects over the prior art, has the disadvantage that the strips are typically flimsy and difficult to properly align. Additionally, the carrier strip can be sticky and thus may stick to unwanted surfaces.

WO98/29313 describes a device for exactly centering a pressure-sensitive label on a disk-shaped article, in particular a compact disk, which has a first housing part with a holder for the label and a second housing part with a holder for the disk-shaped article. The housing parts are interconnected so as to swivel around a common axis of rotation and can be brought from an open position into a closed position, so that in the closed position the holders are positioned face to face. In the closed position, at least one of the holders can be moved towards the opposite holder in the housing part to bring the disk-shaped article in contact with the label. The labels are designed to fit in the device.

DE 29800751 U1 describes a labelling system for providing flexible, inscribable labelling material which provided with adhesive on one side for releasable fixing the label onto a carrier material. The label material is stamped to define a label with a central recess, in particular an annular label for mounting on a CD-ROM. A releasable mounting aid is arranged on the label by means of adhesive, and is formed from a combination of label material and carrier material.

### SUMMARY OF THE INVENTION

The present invention provides a label sheet construction including: a liner sheet; a facestock sheet releasably adhered with adhesive to the liner sheet; at least one weakened facestock separation line through the facestock sheet to the liner sheet to define a facestock sheet label; at least one tab weakened line through the facestock sheet to form at least in substantial part a facestock sheet tab extending out from the label; at least one weakened line through the liner sheet to the facestock sheet and defining a liner sheet patch on a back side of the tab; and the tab and the patch together defining a handle which a user can grasp without grasping the adhesive to remove the label from the liner sheet and to assist in a step of positioning the label on an object to an adhered position thereon, using the adhesive; characterised in that the tab has locating means in the form of a central slot or hole (1212), or opposing side notches.

Advantageously, the step of positioning includes positioning the label on a label applicator such that pins of the label applicator are disposed in the side notches.

Preferably, the tab and patch are removable from the label along a weakened line which includes cuts and ties and the tab and patch are constructed to be removable from the label with the label in the adhered position on the object.

In a preferred embodiment the label has a central hole. Advantageously, the object is an optical disc or a business card CD.

In one embodiment a weakened separation spine label line is provided through the facestock sheet to the liner sheet to define an elongate spine label having an adhesive back surface when removed from the liner sheet. A through-opening through the liner sheet and the facestock sheet and adjacent the tab may be provided, where the through-opening may be crescent shaped and positioned at a distal end of the tab.

In a preferred embodiment the tab defines a first tab, the patch defines a first patch, and the handle defines a first handle, and further comprising the facestock sheet including a second tab, the liner sheet including a second patch on a back side of the second tab, and the second tab and the second patch together defining a second handle releasably attached to the label.

Advantageously, the label defines a first label, the tab defines a first tab, the patch defines a first patch, the handle defines a first handle, the facestock sheet includes a second label and a second tab, the liner sheet includes a second patch on a back side of the second tab, and the second tab and the second patch together defining a second handle releasably attached to the second label.

In a further embodiment there is provided a weakened separation on the facestock sheet and defining a card with an adhesive back and separable from the liner sheet and adapted to be adhered to a jewel case.

The present invention also provides a label application method including:
grasping a handle of a label assembly; the label assembly including a facestock label, a facestock tab extending out from the label, adhesive on a back side of the label, a liner patch adhered to a back side of the tab, and the tab and the patch together forming the handle; and positioning the label generally on a support surface of a label applicator with the adhesive side of the label disposed upwardly; characterised in that: the tab includes locating means in the form of a central slot or hole (1212), or opposing side notches; and the positioning includes positioning the tab such that structures of the label applicator are disposed in the locating means.

In a preferred method, with the label and tab in position on the label applicator, a desired object is positioned on the adhesive side to thereby adhere the label to the object to an adhered position.

Advantageously, with the label in the adhered position, the method comprises separating the handle from the label.

Preferably, the positioning includes the tab being attached to the label with cuts and ties, and the separating includes breaking the ties.

Preferably, the object is an optical disc having a disc through-hole, the label has a label through-hole and the adhered position includes the disc through-hole and the label through-hole being aligned.

The structures may include pins, and the tab, the liner patch, the handle, the side notches and the pins define respectively, a first tab, a first liner patch, a first handle, first side notches and first pins; wherein the label assembly includes a second tab extending out from the label, a second liner patch adhered to a back side of the second tab, and the second tab and the second patch together forming a second handle; and wherein the positioning includes positioning the second tab such that second pins of the label applicator are disposed in the second locating means.

Conveniently, the step of grasping includes grasping the second handle and may include inserting a finger tip in the through-hole and peeling the label assembly off of the label sheet construction.

After the label sheet has passed through a printer or copier and the desired indicia has been printed on the labels, at least one of the tabs is pushed through from the reverse side of the sheet, partially separating the tab from the rest of the sheet. For some label constructions, if there is a second tab, it is preferably pushed through from the reverse side as well. The distance between the tab face cut and the parallel liner cut can be varied in the design to improve functionality, preferably being narrower at the outer extremity, so that the outer edge separates from the rest of the sheet more easily, improving the probability that the perforated edge adjacent to the compact disc label will remain intact. There may or may not be one or more ties in the liner cut near the outer extremity in order to maintain the integrity of the sheet during the manufacturing and printing processes. The tab, which is mostly free of exposed adhesive in that it is still laminated to the die cut section of release liner, is then grasped from the face side, and lifted upward, pulling the compact disc label away from the label sheet. If there is a second tab on the label, this is also removed as the label is removed, and can be grasped by the user's other hand in order to control the position of the label. The user is now able to position the label either directly onto the compact disc or into an alignment apparatus, without any significant contact to an adhesive coated surface. Once the label has been applied to the compact disc, the tabs may be removed by pulling them away from the compact disc, causing the perforation between the tab (s) and the compact disc label to separate.

Disclosed herein is an apparatus for removing and positioning compact disc labels without touching any adhesive-coated surface. The apparatus includes one or two tabs attached to the compact disc label. Another aspect of this disclosure is a novel method of removing compact disc labels without touching an adhesive surface by pushing the tab from behind or pulling the tab from the front and lifting the label.

An alternate embodiment of the present invention includes one or more tab handles in combination with the jewel case alignment tab as described in U. S. Patent No. 5,715,934. This provides a method of positioning the label in the jewel case so that it is properly aligned with and compact disc without handling the adhesive coated surface.

Various other label applicator constructions are disclosed herein. Each includes facestock adhered with releasable adhesive to a liner sheet. Die cut lines are made through the facestock but not through the liner sheet; and die cut lines are made through the liner sheet but not the facestock. Portions of the label sheet are then stripped away. Using different patterns of the die cut lines or other weakened separation lines and stripped away portions, the different label applicator constructions are formed. Each is a sheet construction with a plurality of small elongate labels formed from the liner sheet and releasably held to the facestock. The sheet construction is passed through a printer and the desired indicia printed on the labels. The printed labels are then ready for easy controlled removal and application by the user to tabs of index dividers, file folders or the like.

The invention enables single labels to be applied onto a substrate. In this method, individual labels are placed on the substrate one label at a time. On both short sides of the label, there are"handles"that are held onto the label by small ties. These handles are used to hold the labels over the desired position and used to align the labels. After placing the labels on the desired location, the handles are removed by pulling laterally away from the label.

An alternate construction/method uses a single"handle"on the label. In this method, individual labels are placed on the substrate by using a single handle as an alignment tool. The handles are once again held onto the labels by small ties that are designed to be broken after the label has been placed in its desired location.

### BRIEF DESCRIPTION OF THE DRAWINGS

FIG. 1 is a front view of a first label applicator construction;
FIG. 2 is a rear view of the construction of FIG. 1 ;
FIG. 3 is an enlarged cross-sectional view taken on line 3-3 of FIG. 1;
FIG. 4 is a perspective view of a first application step by a user of a label unit of the construction of FIG. 1 ;
FIG. 5 is a perspective view of a second application step;
FIG. 6 is a perspective view of a third application step;
FIG. 7 is a front view of a second label applicator construction;
FIG. 8 is a rear view of the construction of FIG. 7 ;
FIG. 9 is an enlarged cross-sectional view taken on line 9-9 of FIG. 7;
FIG. 10 is a perspective view showing a first application step by a user of a label unit of the construction of FIG. 7 ;
FIG. 11 is a perspective view of a second application step;
FIG. 12 is a perspective view of a third application step;
FIG. 13 is a front view of a third label applicator construction of the present invention;
FIG. 14 is a rear view of the construction of FIG. 13;
FIG. 15 is an enlarged cross-sectional view taken on line 15-15 in FIG. 13;
FIG. 16 is a perspective view of a top portion of the construction of FIG. 13 showing a first step for applying a first series of printed labels thereof;
FIG. 17 is a perspective view of a second step;
FIG. 18 is a perspective view of a third step;
FIG. 19 is a perspective view of a fourth step;
FIG. 20 is a front view of an alternative embodiment of the third label applicator construction;
FIG. 21 is a view similar to FIG. 20 but with dimensions indicated thereon;
FIG. 22 is a rear view the embodiment of FIG. 20 with dimensions indicated thereon;
FIG. 23 is a front view of a fourth label applicator construction of the present invention;
FIG. 24 is a rear view thereof;
FIG. 25 is an enlarged cross-sectional view taken on line 25-25 of FIG. 23;
FIG. 26 is a perspective view of the construction of FIG. 23 passing through a printer;
FIG. 27 is a perspective view of a top portion of the printed construction of FIG, 26 showing a first step for applying a first series of printed labels thereof;
FIG. 28 is a perspective view of a second step;
FIG. 29 is a perspective view of a third step;
FIG. 30 is a perspective view of a fourth step;
FIG. 31 is a partially cross-sectional view showing an envelope or pouch holding a plurality of offset-stacked sets of dividers ready for application of printed labels from a label construction such as that of FIGS. 23 or 28;
FIG. 32 is a schematic view showing a manufacturing process of a label applicator construction;
FIG. 33 is a top plan view of a label sheet of the present invention;
FIG. 34 is an enlarged view of a portion of the sheet of FIG. 33;
FIG. 35 is an enlarged view of another portion of sheet of FIG. 33;
FIG. 36 is an enlarged view of yet another portion of the sheet of FIG. 33;
FIG. 37 is an enlarged view of a further another portion of the sheet of FIG. 33;
FIG. 38 is a top plan view of an alternative label sheet of the present invention after having passed through a printer or a copier and indicia printed thereon;
FIG. 39 is an enlarged view of a portion of the sheet of FIG. 38;
FIG. 40 is a view of one of the label assemblies of sheet of FIG. 38 after having been peeled off of it; FIG. 41 is a perspective view of a label assembly of the present invention shown in place on a label applicator device;
FIG. 41 a is a view similar to FIG. 41, showing a CD in a resting position;
FIG. 42 is a perspective view of a second label assembly of the present invention shown in position on a label applicator device;
FIG. 43 is a perspective view of a third label assembly of the present invention shown being positioned on a label applicator device;
FIG. 44 is a top perspective of another label assembly of the present invention shown in position on another label applicator device;
FIG. 45 is a side elevational view of FIG. 44;
FIG. 46 is a view similar to FIG. 44 showing a full face label;

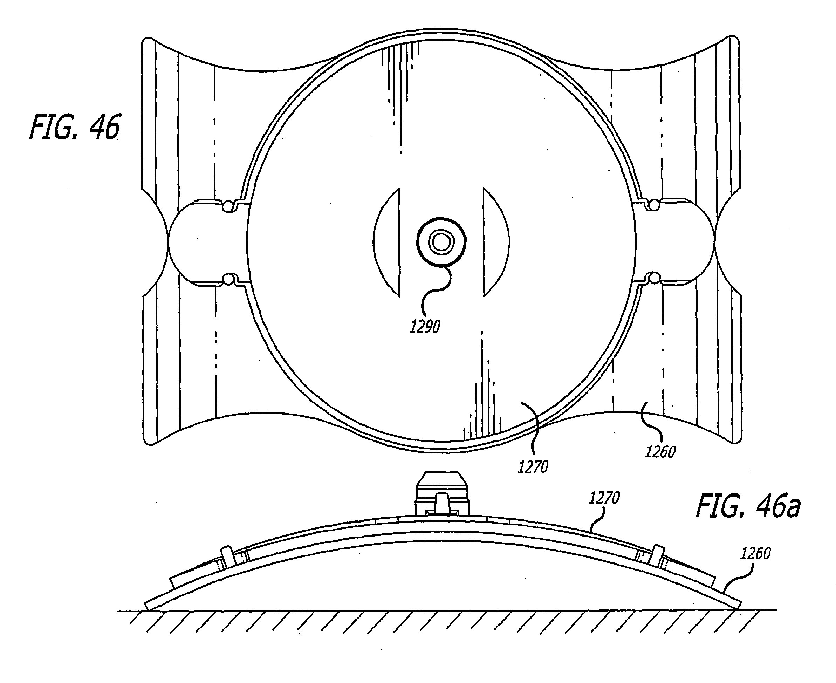

FIG. 46 a is a side elevational view of FIG. 46;

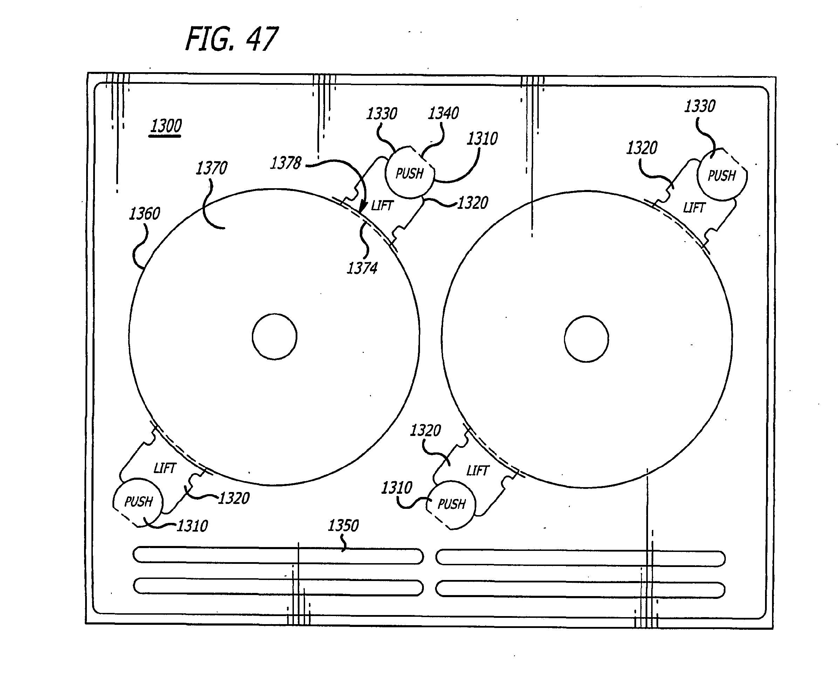

FIG. 47 is a top plan view of an alternative label sheet;

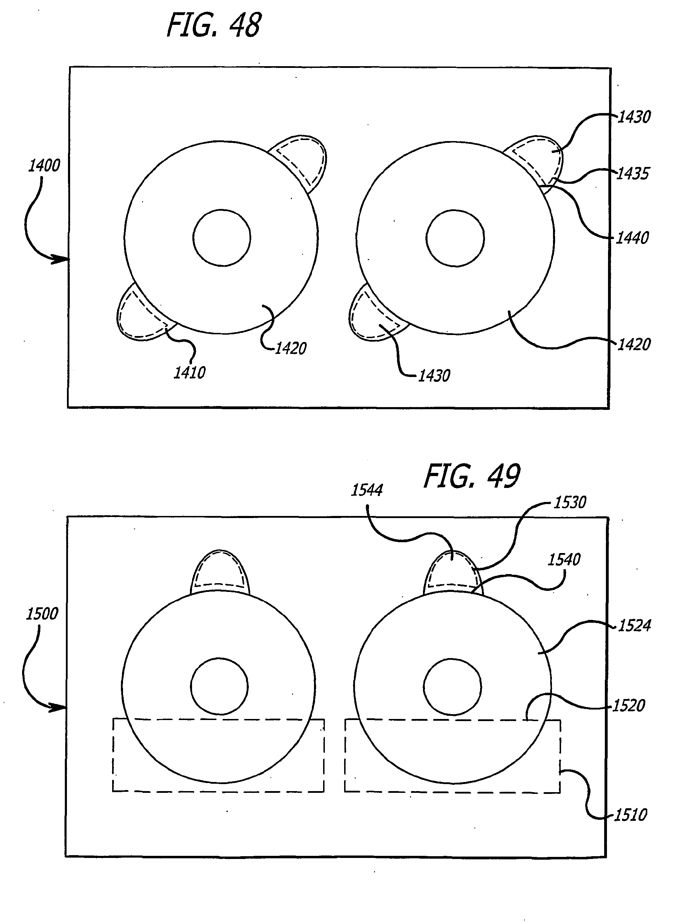

FIG. 48 is a top plan view of an alternative label sheet of the present invention;
FIG. 49 is a top plan view of another label sheet of the present invention;

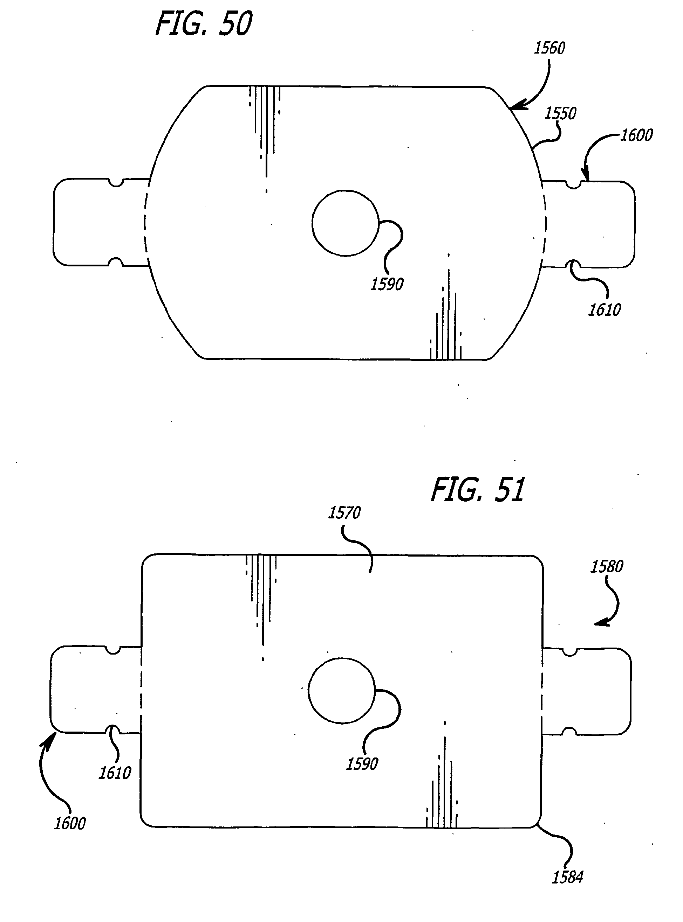

FIG. 50 is a top plan view of a label assembly for a business card compact disc of the present invention;
FIG. 51 is a top plan view of another label assembly for business card compact disc; and

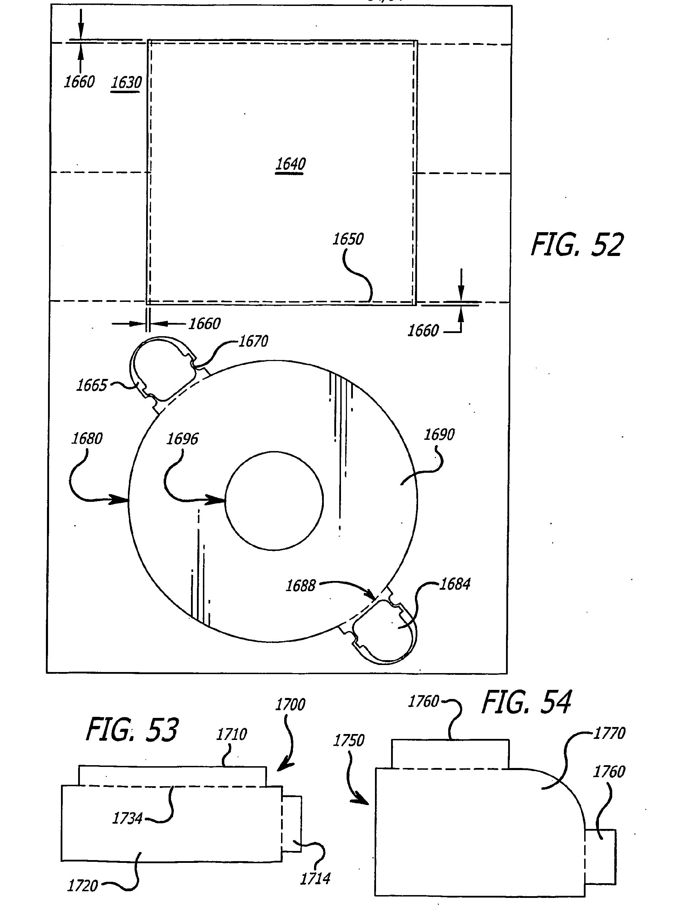

FIG. 52 is a top plan view of a label assembly sheet which includes a jewel case insert.

### DETAILED DESCRIPTION OF PREFERRED EMBODIMENTS OF THE INVENTION

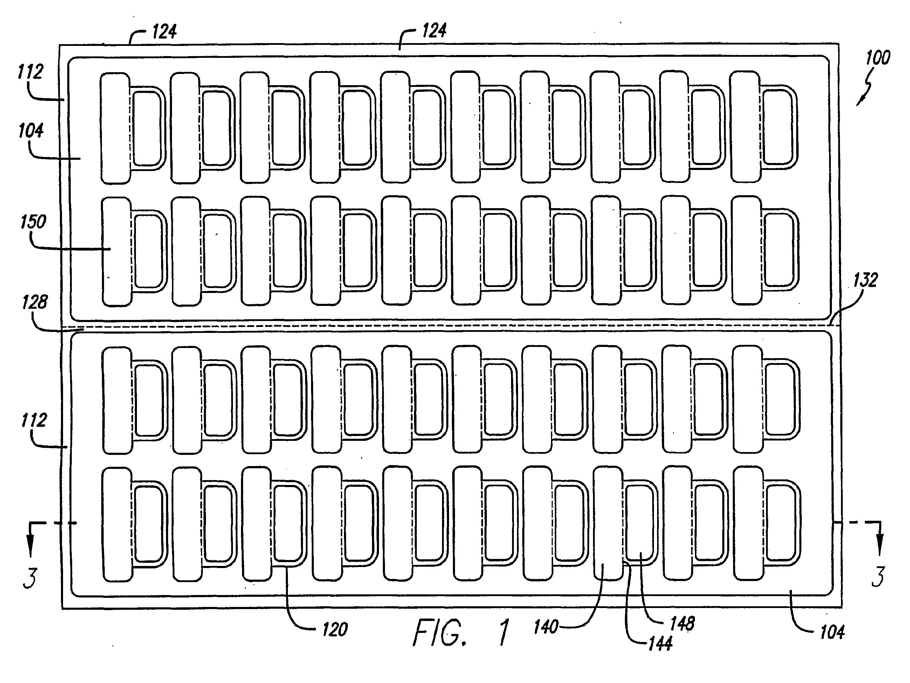

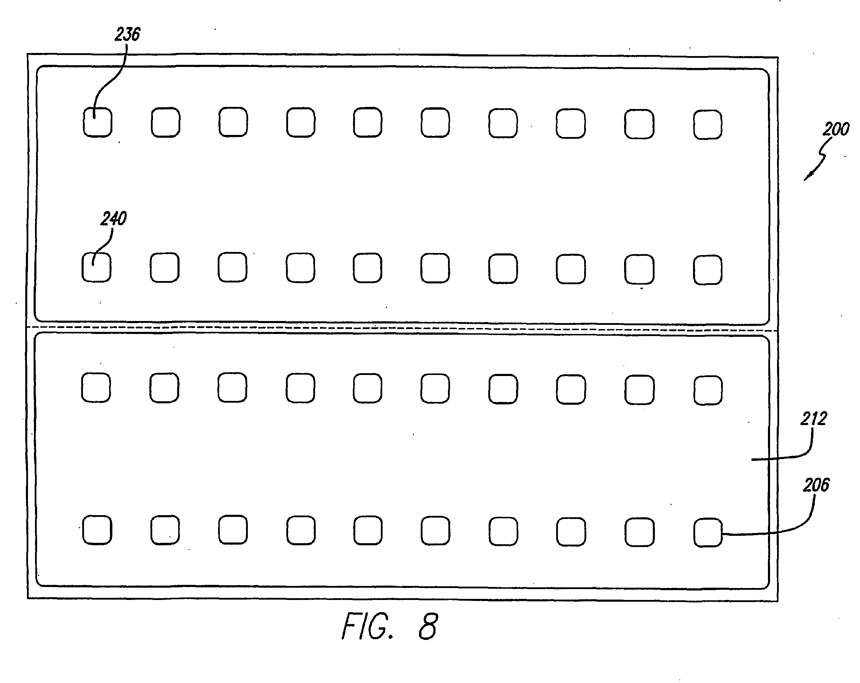

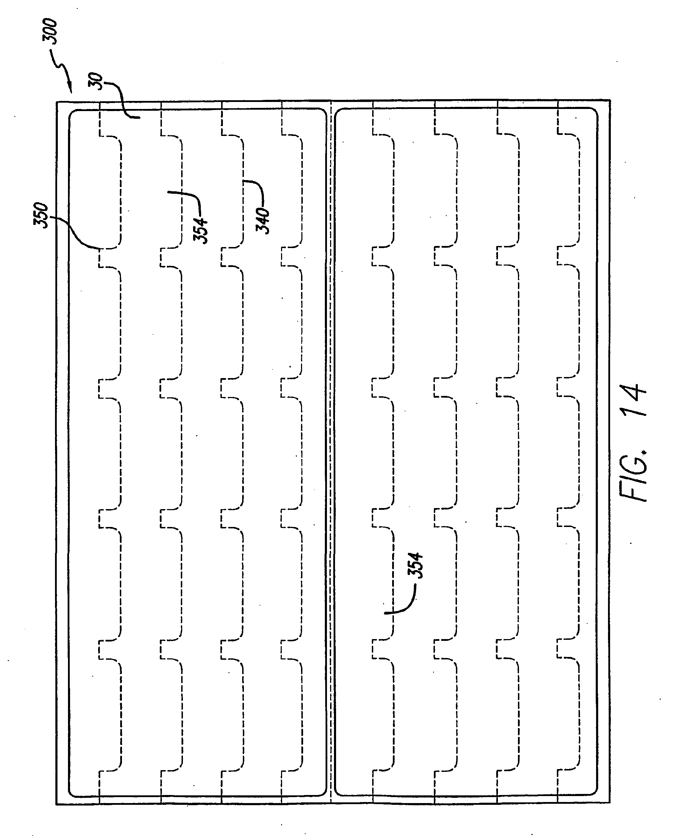

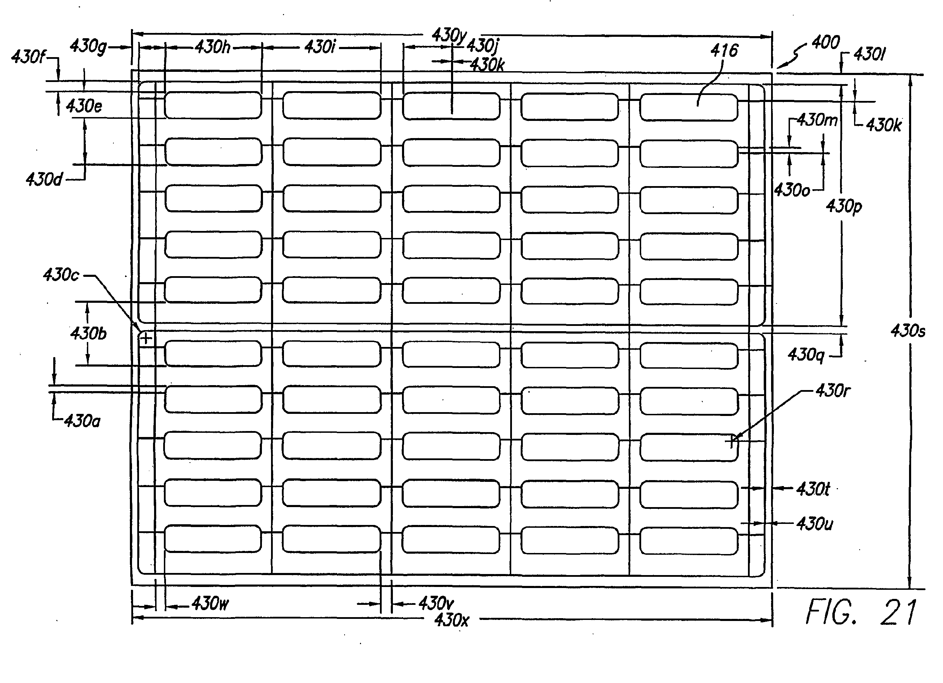

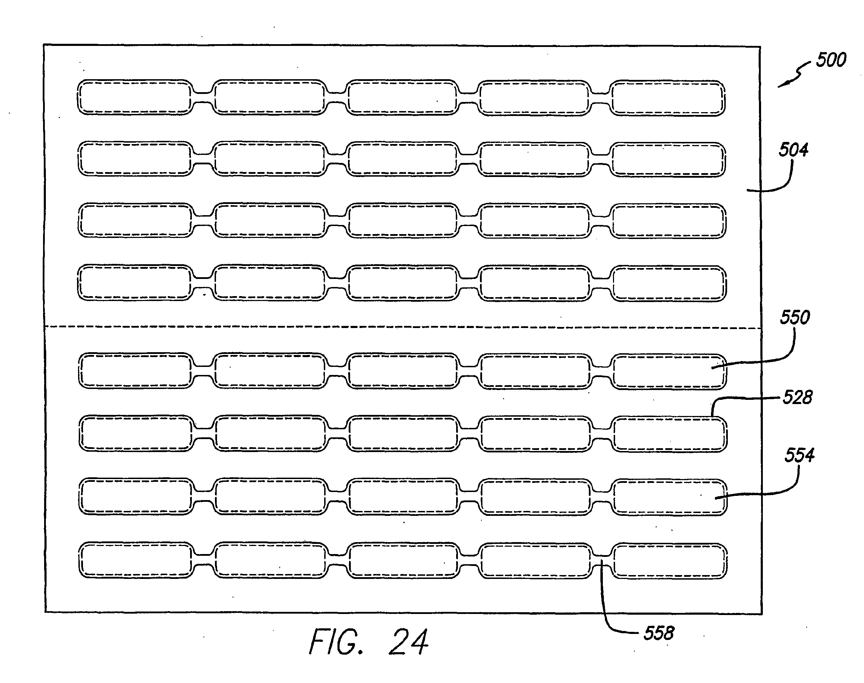

Figures 1 to 32 show embodiments of labels and label applicator constructions as described in the applicant's copending European Patent application EP-A-1299232 and are included here for completeness. Generally speaking, each label applicator construction is formed as a sheet construction having a liner sheet with a facestock attached to the back side thereof. One embodiment is to form the sheet construction as a laminate having an ink and/or laser receptive top coat facestock laminated with pressure sensitive adhesive to a release-coated paper liner.

The facestock has weakened separation lines formed therein to define a plurality of facestock labels. And weakened separation lines in the liner sheet form the liner sheet so it can be separated into portions to assist in the proper placement of the facestock labels on the tabs of the index dividers, file folders or the like. More particularly, the weakened separation lines of the liner sheet allow the liner sheet to be separated such that one or more portions of the liner sheet can be manually handled by the user in the placement of the facestock labels so that he need not touch the labels. Additionally, the liner sheet portions thereby defined help the user properly position the facestock label (s) on the tab (s). As will become apparent from the following detailed descriptions, some of the embodiments herein allow the user to individually remove and manipulate labels and others allow for an entire line or row of labels to be essentially simultaneously applied to a line of stacked, staggered tabs in a manner that is an improvement over the problems experienced with the Pollman method.

The weakened separation lines can be formed by generally any known method. A preferred method for many of the lines is to die cut them. Each of the die cut lines typically will penetrate only one of the liner sheet or the facestock sheet. And the die cut portions of the liner sheet or facestock sheet are maintained on the label applicator sheet construction by the adhesive so that they will not separate from the sheet while the sheet is being passed through a printer or copier. Instead of die cutting, the weakened separation lines can be formed by perforated lines or other means as would be apparent to those skilled in the art.

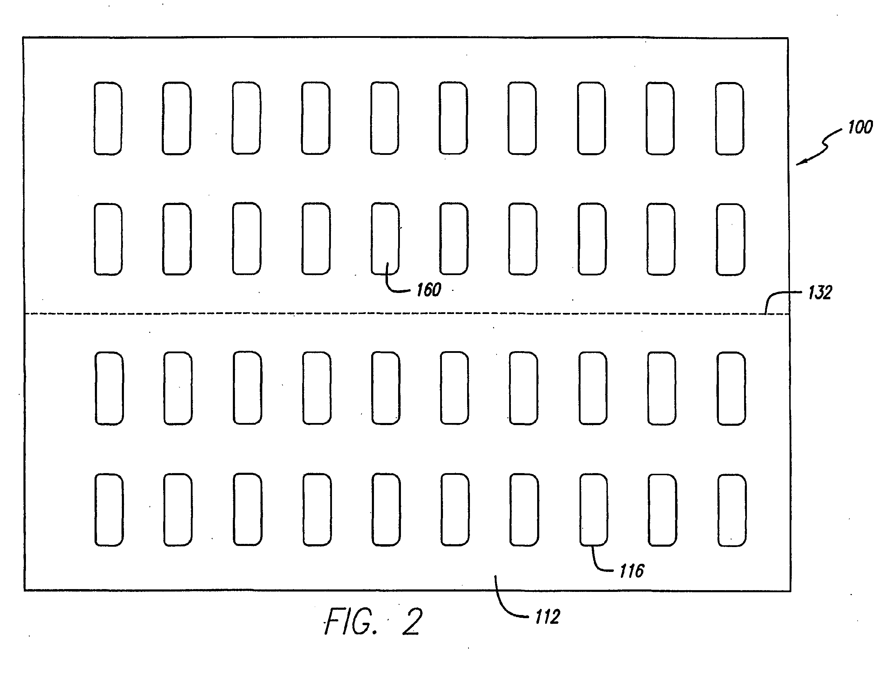

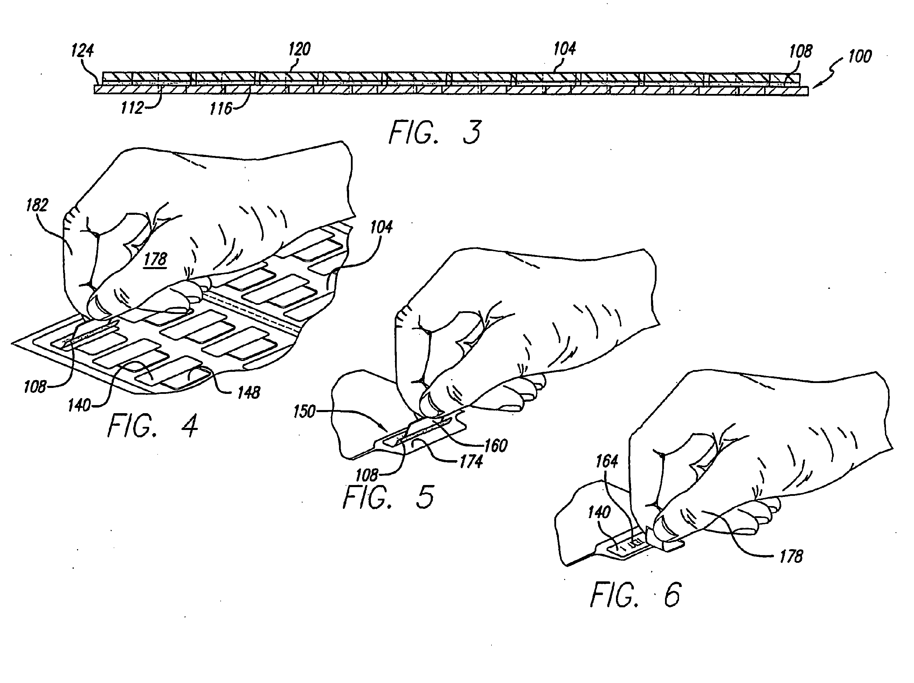

A first label applicator construction is shown in FIGS. 1 through 6, generally at 100. It can be understood from FIG. 3 that the facestock sheet 104 is attached with adhesive 108 to the liner sheet 112. Both the liner sheet 112 and the facestock 104 have die cut lines. The pattern for the die cut lines 116 of the liner sheet 112 is best shown in FIG. 2, which is the rear view of the sheet. FIG. 1 then shows the pattern of the die cut lines 120 in the facestock 104; and as can be understood therein and also from FIG. 3, portions of the facestock have been stripped away to form the edge margins 124 of the construction. These margins are provided to reduce the curl on the label sheets. Additionally, a gutter strip 128 has been removed from the center and a perforation line 132 formed down the center of the liner sheet 112. This allows the construction 100 to be divided into two parts by the user. Two smaller label applicator construction sheets are thereby formed for passing through the printer or as may be desired by the user.

Referring to FIG. 1, the facestock sheet is cut by the die cut lines 120 into four columns of ten rows of labels. Of course, different numbers of columns and rows or different patterns (non-matrix) of the labels can be used as needed. Each of the facestock labels has a two part construction, each having a large rounded corner rectangle 140 attached with a perforated line or ties 144 to a smaller rounded corner rectangle 148. And the liner sheet is then cut to define a similar number of columns and rows of small rounded corner rectangles 160, each positioned on the back of the respective rounded corner rectangles 144 of the label and adhered thereto by the adhesive 108. The smaller facestock label rectangle 148 defines a handle portion of the label unit 150, and the larger rectangle 140 defines the actual facestock label of the unit 150 on which indicia 164 is printed. A respective liner sheet 160 rectangle is adhered to this handle portion 148 of the unit 150.

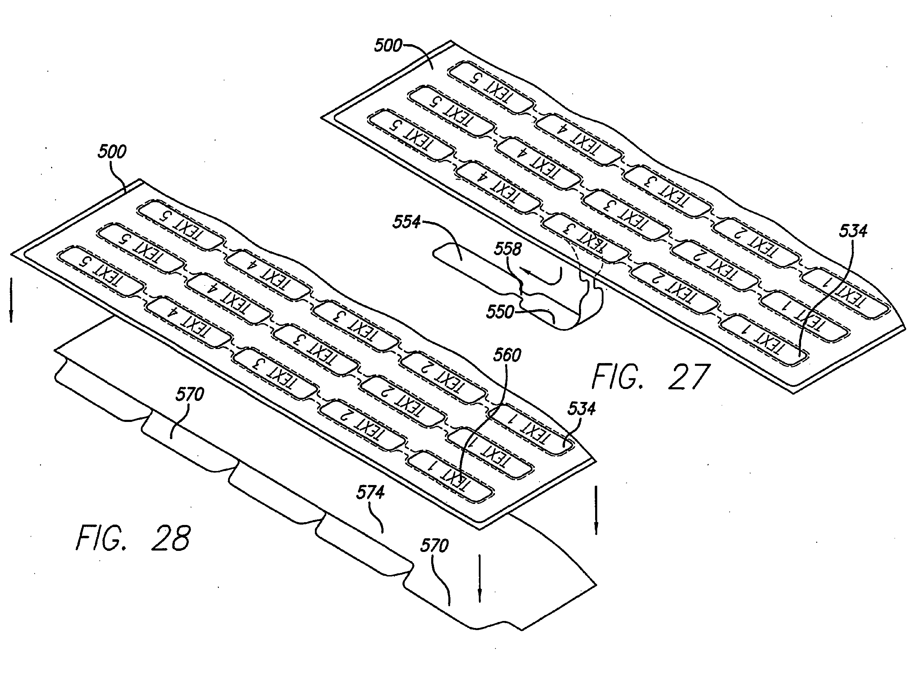

The sheet construction 100 is passed through a printer or a copier, such as shown in FIG. 26 at 170. And the desired indicia 164 are printed on the facestock label portion 140 of the unit 150. It is anticipated that all of the facestock labels 140 will be printed in a single pass through the printer 170. However, it is possible to print less than all of them and then pass the sheet through a second, third, or more times to print on the remaining labels. Alternatively, the user can hand write on some or all of the labels 140.

After the label 140 has been printed, or handwritten thereon, with the desired indicia 164, the label unit 150 is pulled off the rest of the sheet, as shown in FIG. 4, by the user grasping the liner sheet portion 160 and the handle portion 148 and removing them along their die cut lines from the surrounding liner sheet and facestock sheet and pulling the label portion 140 off of the underlying liner sheet with adhesive 108 remaining on the bottom portion of the label. The user then manipulates the label portion 140 into a desired position on the tab 174 by holding and manipulating the facestock handle portion and the attached liner sheet portion, as shown in FIG.

5, between his thumb 178 and forefinger 182. The label 140 is then pressed down by the user and adhered with the adhesive 108 in the desired position on the tab 174. The handle portion with liner sheet portion attached thereto are separated from the printed adhered label by tearing along the perforation line or ties 144 as shown in FIG. 6. Thereby the printed label 140 is accurately positioned by the user and without the user touching the label portion and thereby dirtying it or smudging it with body oils from the user's fingers or the user's fingers adhering to the adhesive,

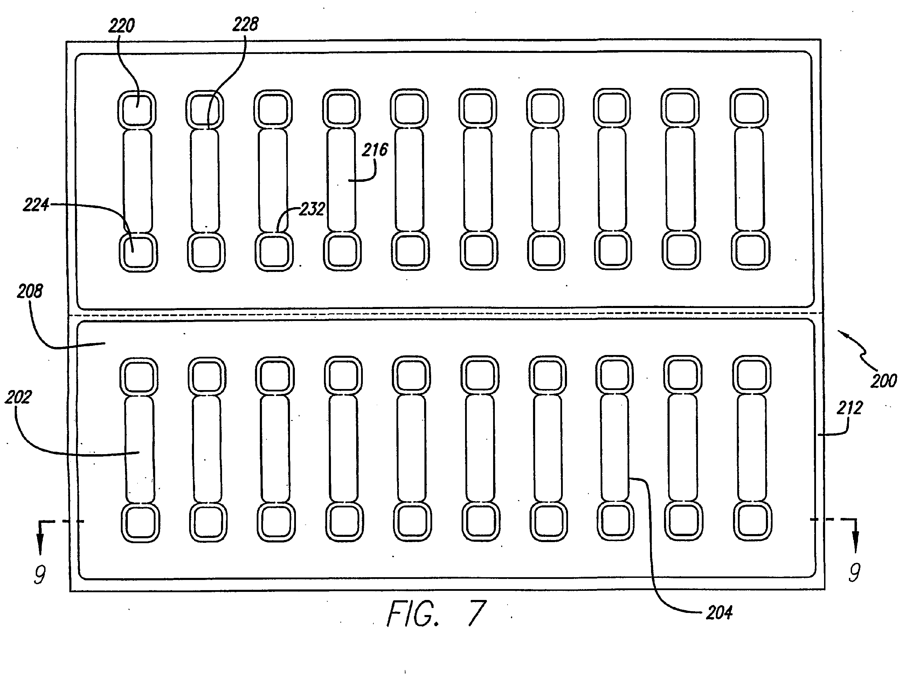

FIGS. 7 through 12 illustrate a second label applicator construction generally at 200. It is seen therein that it is conceptually similar to the construction 100 in that removable label units 202 are defined by die cut lines 204,206 in the facestock 208 and in the liner sheet 212, and adhesive 214 is provided between the sheets. However, instead of the facestock portion being formed by a large elongate rectangle defining the label with a smaller elongate rectangle parallel thereto along a side edge defining the handle portion, a different configuration is shown in construction FIG. 7. Although the unit 202 of FIG. 7 includes a similar elongate rectangular facestock label 216, facestock handle portions 220,224 are formed at each end thereof and with perforation lines or ties 228,232 between the ends of the facestock label and both of the handle portions. Similarly, liner sheet portions 236,240 are die cut on the backs of each of the facestock handle portions 220,224, respectively. The liner sheet portions 236,240 have slightly smaller dimensions than the respective handle portions 220,224, defining a thin facestock margin about the perimeter of the liner sheet portions.

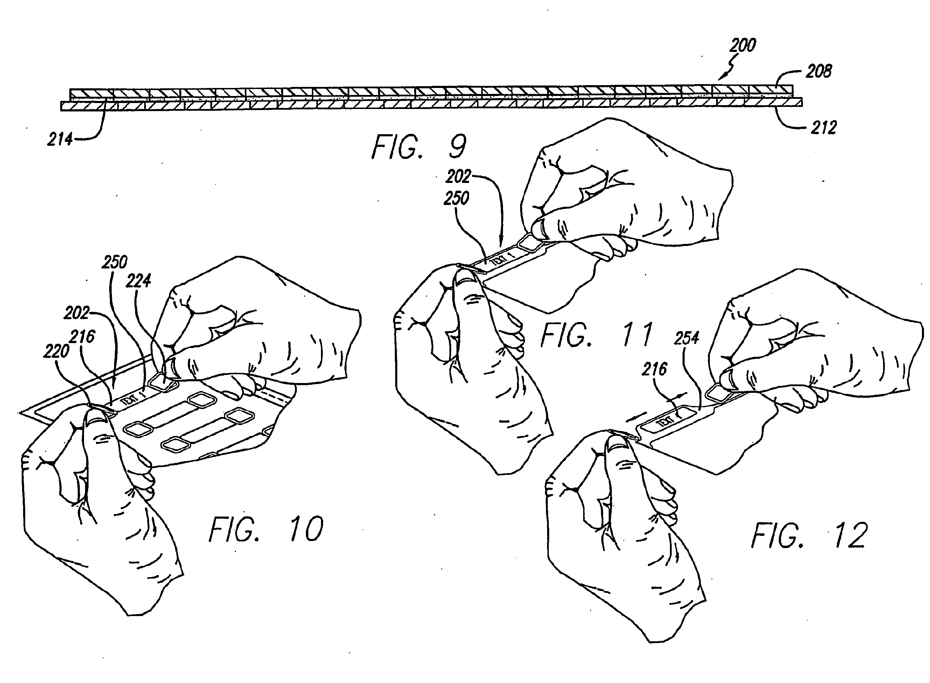

After the sheet 200 has been passed through a punter or a copier and the desired indicia 250 printed on the labels 216, as shown in FIG. 10, the two end handle portions 220,224 and liner sheet portions 236,240 are grasped and pulled away from the sheet and the facestock label 216 peeled off from the liner sheet 212 with a layer of adhesive on the back of the label. With the two handle portions grasped by the user, the label unit 204 is positioned such that the label 216 is in the desired position on the tab 254 as shown in FIG. 11, and the label 216 is then pressed into position. The two handle portions 220,224 are then pulled away along the perforation lines 228,232 from the ends of the adhered label, as depicted in FIG. 12. Thereby, similar to the sheet 100, the facestock label 216 itself is never touched by the user.

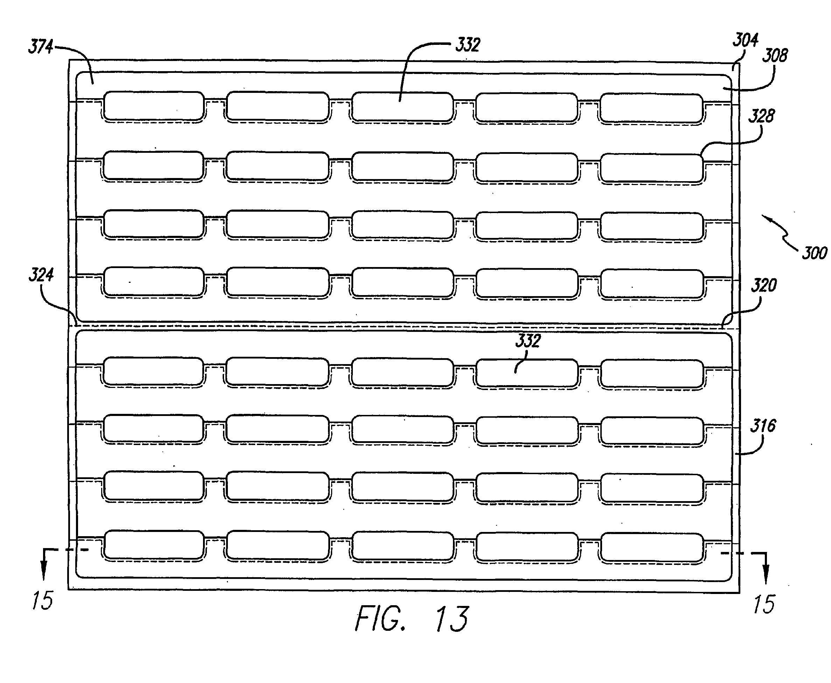

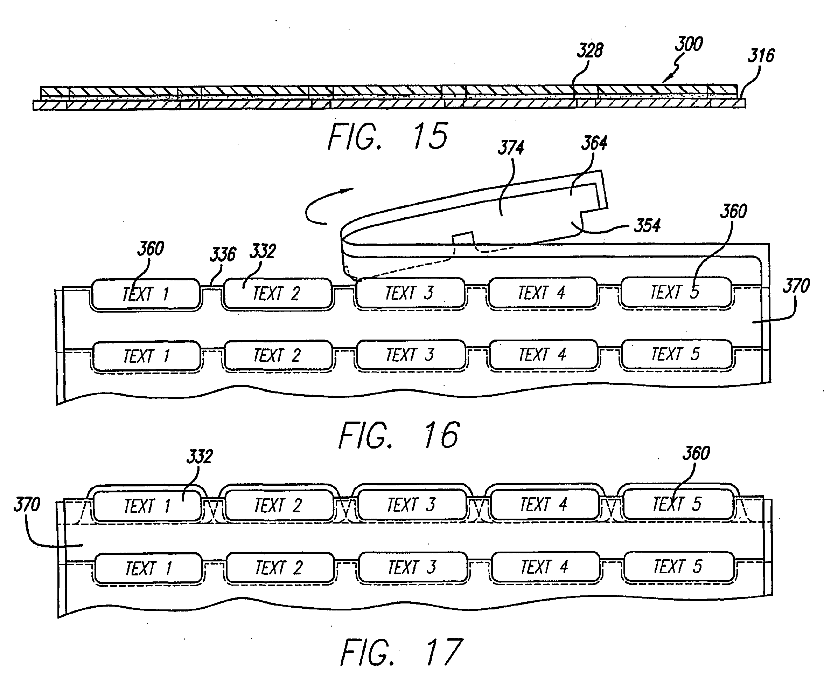

Referring to FIGS. 13 through 19, a third label applicator construction sheet is shown generally at 300, It is seen also to comprise a liner sheet 304 and a facestock 308 attached with adhesive 312 to the face of the liner sheet. Similar to the other constructions disclosed herein, margin edges 316 of the facestock have been cut and removed as well as a center gutter portion 320 and a perforation line 324 through the liner sheet and down the middle of the liner sheet as formed. The facestock has been die cut to form lines 328 of spaced rounded corner rectangular labels 332, each connected to adjacent labels with thin strips 336 and with the die cut line extending from the end labels to the edge of the facestock. The liner sheet 304 is die cut 340 with end lines extending all the way to but spaced a small distance to form a small break-away tie at the edge of the sheet. The die cut lines extend in a distance and then extend down, across and up, parallel to the outer shape of the adjacent label but spaced outwardly a slight distance therefrom and extending out to form a small plateau 350 between adjacent labels similar to the spacing on the facestock sheet between the adjacent labels. The label liner sheet portions 354 are adhered to respective ones of the facestock labels 332 while the sheet is intact and passed through the printer or copier. After passing therethrough and with desired indicia 360 printed on the labels 332, the liner strip 364 at the top of the sheet is pulled away and separated from the remainder portion 370 of the sheet. The liner sheet portions mentioned above are removed with the liner sheet strip together with a liner sheet bar at the top 374. This step is shown in FIG. 16. The adhesive connection between the facestock and the liner sheet and the small ties at the end of the liner sheet cut lines, hold the sheet intact and prevent the liner strip 364 from separating before it is manually pulled away by the user after the printing. When it has been pulled away, the liner sheet portions 354 on the backs of the respective facestock labels 332 are removed thereby exposing the adhesive back sides of the line of labels 332 at the top of the remaining sheet portion 370. The top row of exposed labels 332 extends a slight distance out from the top edge of the sheet. The large remaining sheet portion 370 can then be manipulated by the user into the desired position aligned with the set of tab dividers 374 or file folders with their staggered tab 378. The body portion 370 provides a strong, not flexible or flimsy, handle for manipulating and accurately positioning the top row of exposed labels onto the desired positions on the staggered tabs as shown in FIG. 17.

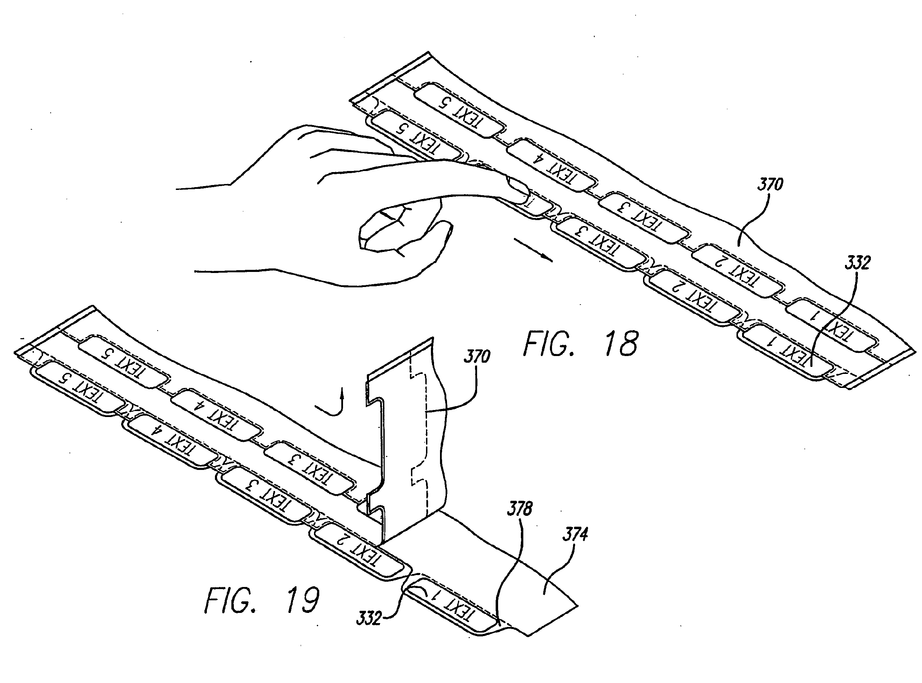

Each of the properly positioned labels 332 is then pressed flat down to form a strong adhesive bond onto the respective tabs 378 as depicted in FIG. 18. The body handle portion 370 of the sheet is then pulled away from the adhered labels 332, breaking the thin facestock ties between the adjacent labels and leaving the labels in position. Referring back to FIG. 15, the next top liner strip is removed to expose the backsides of the second line of printed labels. The second line of printed labels are then manipulated into position on a second set of staggered dividers, the labels pressed into position and the remaining smaller body portion removed. This can be understood by again viewing FIGS. 17 through 19.

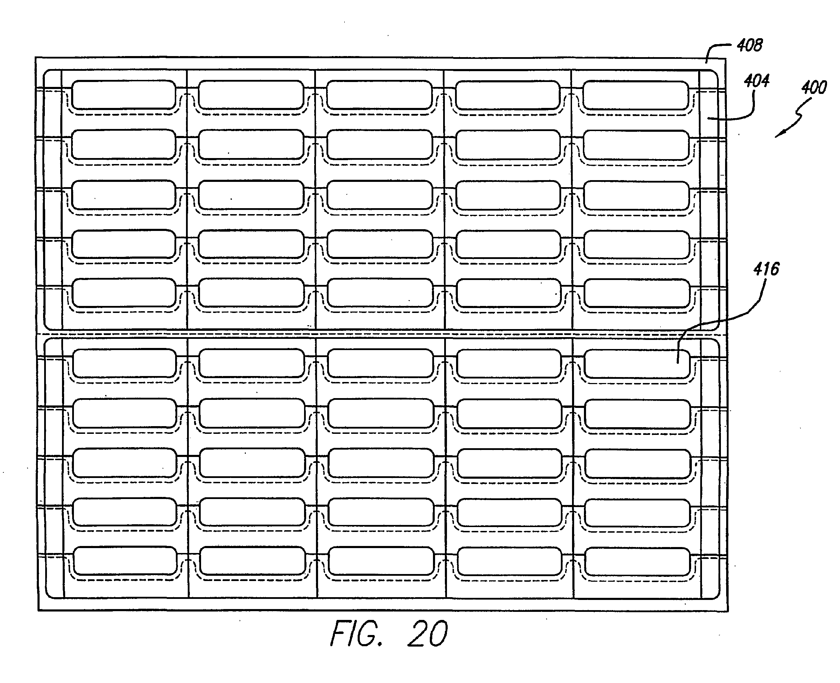

The fourth embodiment of FIG. 20, shown generally at 400, is an improvement over the embodiment of FIG. 13, and a number of small differences are apparent. It similarly includes facestock 404, liner sheet 408, adhesive, and cut lines to form labels 416, strips, etc. One of the differences is that there is an increased offset between the face and liner cuts. Also, there are more rounded corners, additional ties are provided on the faces, additional ties are provided on the liners and additional rows of labels are provided. The face cuts are provided to relax the post-laser curl in laser printers.

Referring to FIG- 21, preferred dimensions in mm (inches) are: 430a 1,6 (0.063), 430b 31.775 (1.251), 430c 3.175 (R0.125 typical), 430d 19.05 (0.750), 430e 11.125 (0.438 typical), 430f 5.563 (0.219), 430g 13.894 (0.547), 430h 42.062 (1.656 typical), 430i 51.587 (2.031 typical), 430j 20.93 (0.824 typical (this half of sheet only)), 430k 0.152; 0.2032; 0.254 (.006 first row .008 second, third row; .010 fourth row tie typical (this half of sheet only)), 4301 4.75 (0.187 ref.), 430m 2.388 (0.094 typical), 430n 0.254 (0.010 tie typical both sides), 430o 0.152 (0.006 tie typical both sides), 430p 102.235 (4.025 typical), 430q 1.905 (0.075), 430r 2.769 (R 0.109 typical), 430s 215.9 (8.500 web width ref.), 430t 1.6 (0.063 typical), 430u 0.254 (0.010 tie typical both ends), 430v 4.775 (0.188 typical), 430w 4.775 (0.188 typical), 430x 276.225 (10.875) and 430y 279.4 (11.000)

It can be seen that ten cavities are provided across by five around at 42.062 (1.656 inches) by 11.125 (0.438 inch). Five ties per cavity as are provided on one-half of the sheet, and four ties per cavity on the other half of the sheet. The two surrounding cavities are 276.225 (10.875 inches) by 102.235 (4.025 inches).

The 0.0381 (1.5 mil) polyester face is cut through to the 0.0762 (3.0 mil) paper liner.

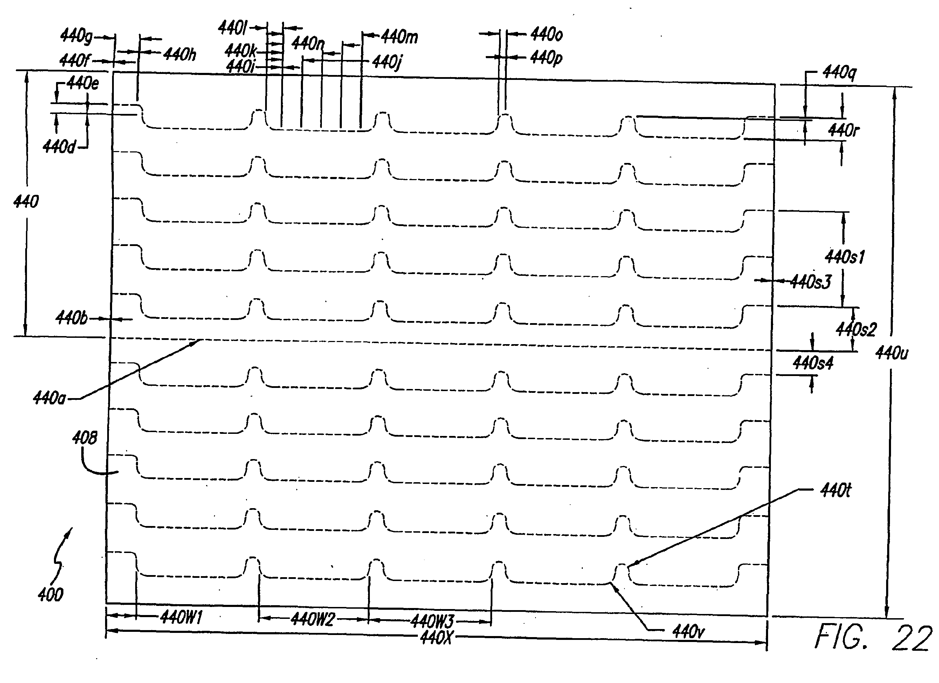

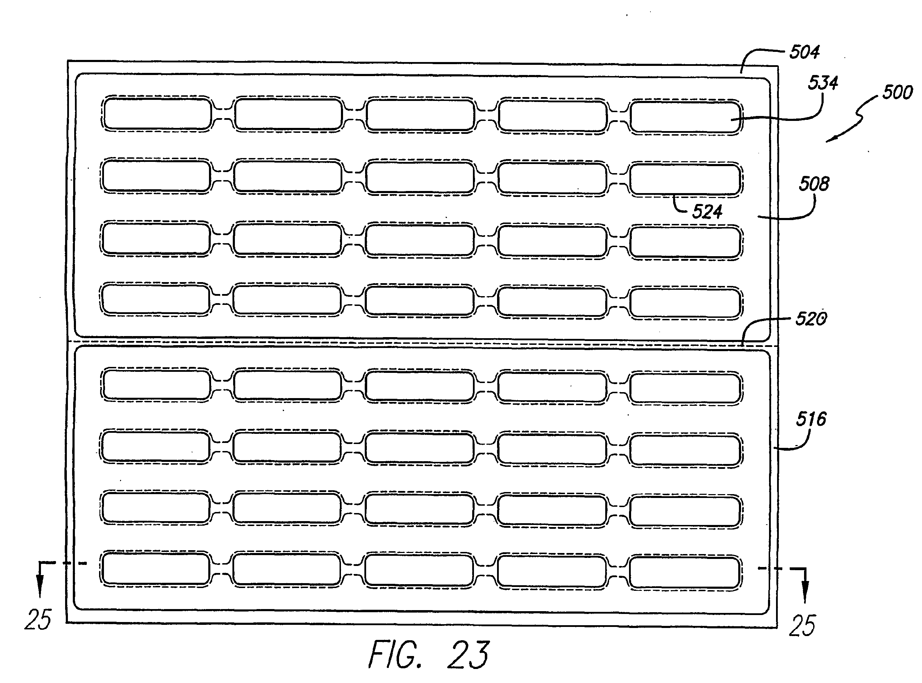

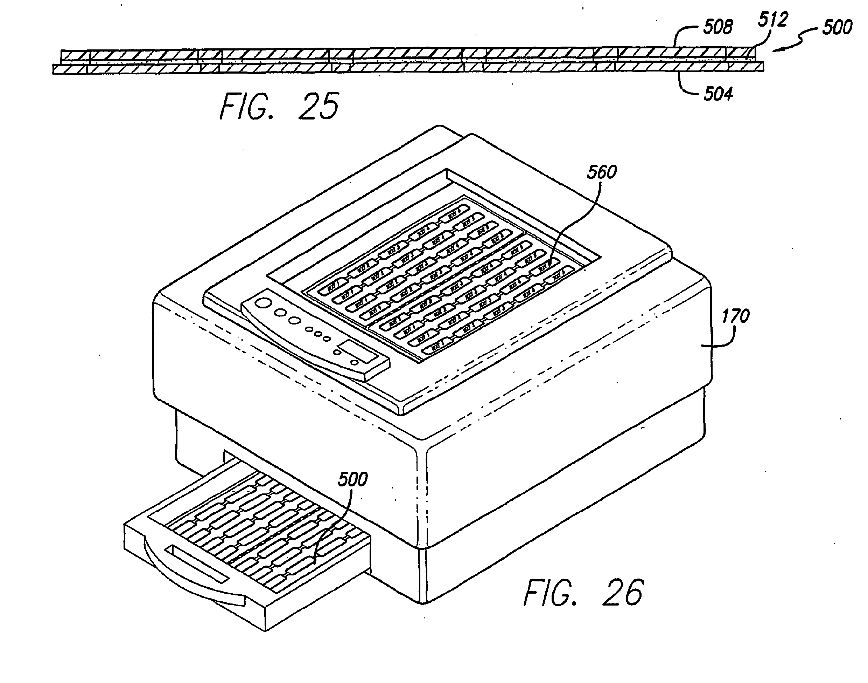

Referring to FIG. 22, preferred dimensions in mm (inches) are: 440a 3.175 x 0.7938 (1/8"cut x 1/32"tie), 440b 0,787 (0.031), 440c 107.95 (4.250), 440d 0.381 (0.015 tie typical both ends each repeat), 440e 5.969 (0.235 both ends), 440f 0.7874 (0.031 tie typical), 440g 9.296 (0.366), 440h 0.381 (0,015 tie typical both ends), 440i 0.381 (0.015 tie typical), 440j 7.95 (0.313 typical), 440k 15.875 (0.625 typical), 4401 6.172 (0.243 typical), 440m 31.75 (1-250 typical), 440n 23.825 (0,938 typical), 440o 3.378 (0.133 typical), 440p 0.381 (0.015 tie typical), 440q 9.525 (0.375 typical), 440r 11.1 (0.437 typical), 440sl 38.1 (1.500), 440s2 19.05 (0.750 typical), 440s3 0.787 (0.031), 440s4 12.7 (0.500), 440t 3.175 (R0.125 typical), 440u 215.9 (8.500 web width), 440v 4.775 (R0-188 typical), 440wl 13.487 (0.531 typical), 440w2 44.45 (1.750 typical), 440w3 51.587 (2.031 typical), 440x 277.825 (10.938) and 440y 279.4 (11.000 circumference) Referring to FIGS. 23 through 30, a fifth label applicator construction is shown generally at 500. It similarly includes the back liner sheet 504 and the facestock 508 adhered to a front surface thereof with adhesive 512, as shown in FIG. 25. Similarly, margin 516 and the center gutter portion 520 of the facestock have been cut and removed. Die cut lines 524,528 are formed in both the liner sheet to but not through the facestock and through the facestock to but not through the liner sheet. The die cut lines 524 through the facestock form parallel rows of spaced rounded rectangular labels 534. For example, as shown in FIG. 23, eight rows of five labels are formed. Thin breakable facestock necks separate adjacent labels in each row.

The die cut lines 528 in the liner sheet 504 form a plurality of liner strips 550, each of the strips is comprised of a series of rectangular liner sheet portions 554 connected at the center ends to the adjacent liner sheet portions with necks 558. Each of the liner sheet portions 554 has the same shape but with slightly larger dimensions than the underlying and attached facestock label 534. The liner sheet necks 558 provide sturdy connections between the liner sheet portions 554 such that the entire strip 550 can be removed without the liner sheet portions 554 separating.

It is removed after the sheet has been passed through a printer 170 and the indicia 560 printed on the top surfaces of the facestock labels as depicted in FIG. 26.

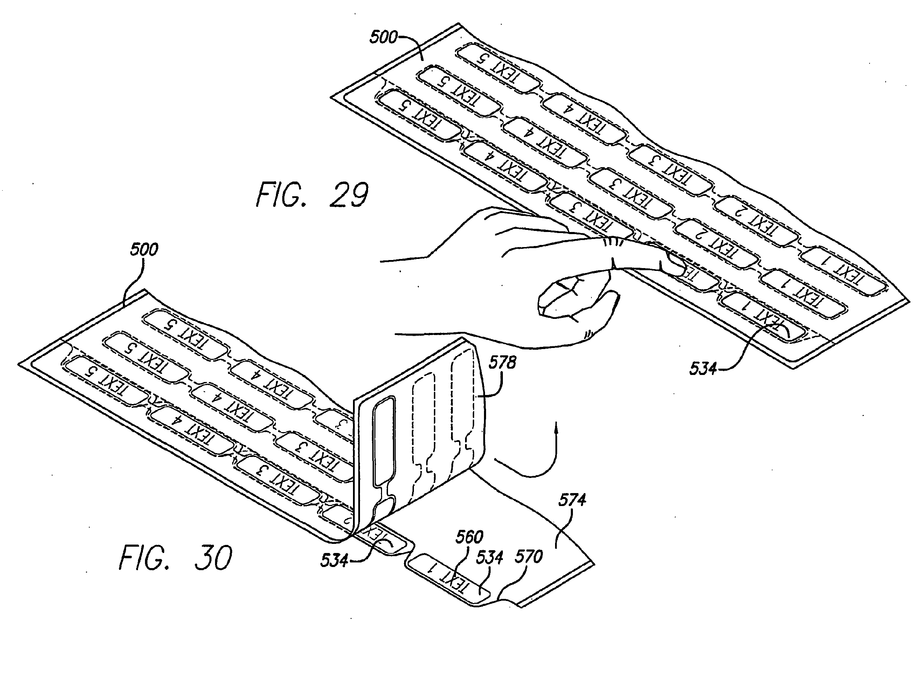

In other words, the liner sheet strip 550 is peeled off or removed from the sheet, leaving the exposed backsides of the respective adhesive labels 534. The sheet can then be manipulated such that the exposed backsides of the labels 534 are positioned on the respective stacked and staggered tabs 570 of the dividers or file folders 574 as shown in FIG. 28. The labels 534 are pressed down into position to provide a firm, straight adhesion of the labels to the tabs 570, as depicted in FIG. 29. The remainder of the sheet 578 is then pulled off of the labels 534 as shown in FIG. 30, leaving them properly applied on the tabs.

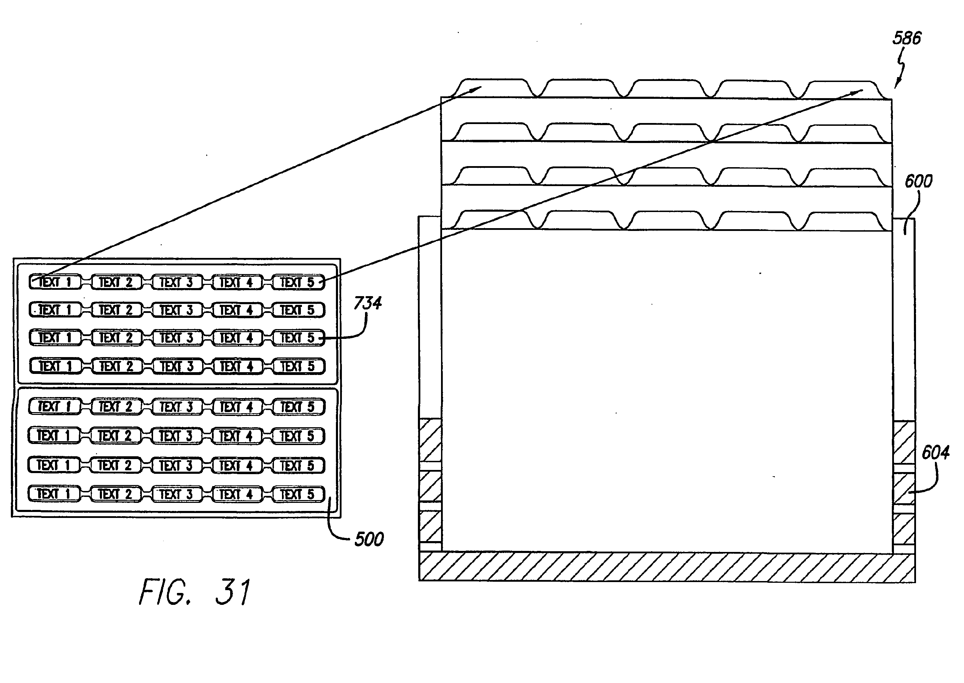

An advantage of construction of 500 is that more than one row of labels can be applied at the same time by removing more than one of the liner strips 534. A system for doing this is shown in FIG. 31, where, for example, four rows of printed labels can be applied at the same time to four sets of dividers 586. If the dividers 586 are offset or stacked in a stepped fashion relative to one another, a method for doing this consistently and accurately and holding the sets in this offset position is shown by the pouch 600 of FIG. 31. The pouch 600 has a series of staggered pockets 604, each for holding a respective set of dividers 586.

In other words, FIG, 31 shows a system of placing four rows of labels on tab dividers in a single step. The label sheet construction can be the sheet 500, for example, or constructions as illustrated herein as would be apparent to those skilled in the art. The tab dividers 586 are placed in the unique pouch 600, which positions them in a staggered layout.

The pouch 600 can be made from a sheet of paper with several pockets 604 of the same material, glued on the body of the pouch by adhesive. The paper will preferably be ninety pound index or higher basis weight material that can be durable as sensitive dividers are placed in and out of the pouches. This pouch 600 speeds the label application process where numbers of different sets of dividers must be labeled as part of a single operation. This speeds the labeling operation and helps ensure accurate alignment and placement of the labels with minimal user handling.

Examples of materials usable for the label applicator constructions disclosed herein are for the clear film label for laser printers: the facestock can be 0.0381mm (1.5 mil) polyester with laser topcoating, the adhesive can be permanent acrylic adhesive, and the liner can be 0,0864mm (3.4 mil) paper release liner. For the clear film label for inkjet printers, the facestock can be 0.0381mm (1.5 mil) polyester with inkjet top coating, the adhesive can be permanent acrylic adhesive, and the liner can be 0.0864mm (3.4 mil) paper release liner. Alternatives range from using ink and toner receptive facestock material to using both permanent and removable adhesives. As an example for paper labels, the facestock can be 0.1016mm (4.0 mil) paper facestock, the adhesive can be acrylic emulsion and the liner can be .07112mm (2.8 mil) paper liner.

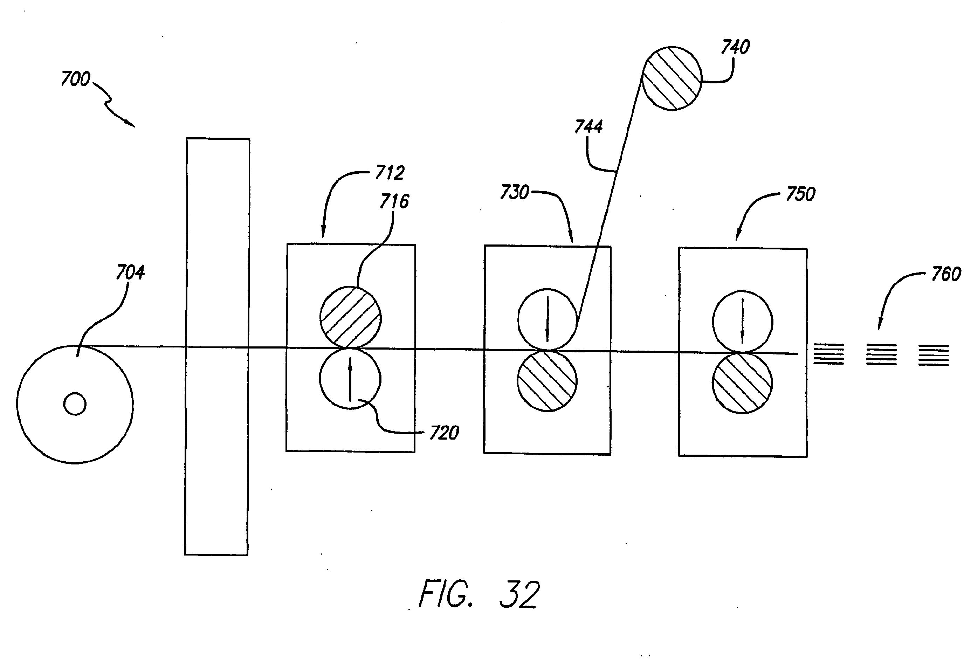

A manufacturing process is shown schematically in FIG. 32 at 700. Referring thereto, the material is a laminate consisting of an ink and/or laser receptive top coated facestock laminated via pressure sensitive adhesive to a release coated paper liner. The facestock can be ink or toner receptive paper or film. The adhesive can be any acrylic emulsion, solvent or hot melt pressure sensitive adhesive that is permanent or removable. And the release liner is a release coated liner. It is supplied in roll form 704 for converting into label sheets. The converting operation may or may not include printing, which generally speaking is not critical to the function or application of the label product.

The material is web fed through the converting press, such as the Mark Andy 4120, so as to pass through an initial rotary die station 712 that, when and where the product requires it, cuts through the liner but not through the polyester facestock. The anvil roller 716 is on top and the cutting die 720 is below at this station, as shown in the drawing. The rotary die that is in the initial die station may or may not include a perforation blade, which makes intermittent cut through the liner along the center of the web.

The web may or may not be turned over before it is passed through a second rotary die station 730 that, where the product requires it, cuts through the polyester facestock but not through the liner. The web then passes through a matrix removal station 740 that lifts and removes a section of the face material 744 which typically includes, but is not limited to, the perimeter around the label sheet and may or may not include a strip removed from the center of the sheet that coincides with the perforation in the liner.

Finally, the web passes through a sheeting station 750, which uses one or more crossdirectional blades to cut the web into individual sheets. The sheets are fed into a packaging/collating station 760, which includes a stacker, which stacks the sheets one on top of the other into predetermined count stacks. The individual stacks are either fed into a collator, or fed into a packaging area, where they are packaged in bulk for later collation with other materials.

This general concept of providing a handle or tab (or strip) attached to a label to help the user position and secure the label to the desired surface without touching an adhesive surface can be applied to various different label constructions, as will now be described. In particular, it can be applied to compact disc labels, which are circular and have a circular opening. As described herein, the circular opening can be a full-face type of (narrow) opening corresponding to the diameter of the center opening of the disc or can be a standard diameter such as 41.275mm (1 5/8 inch).

The circular label itself will have a diameter corresponding to the diameter of the compact disc and may be 114.3mm (4 1/2 inches), as an example. The label assembly can have one or preferably two diametrically opposed tabs extending out from the label and attached thereto. The label assemblies are formed on a sheet having a facestock sheet releasably adhered to a liner sheet.

The label assembly is formed by weakened separation lines (die-cut, perforated, scored and other) in the facestock sheet and/or the liner sheet, The various arrangements thereof will be described in detail now with reference to the accompanying drawings.

After the sheet has been passed through a printer or copier and the desired indicia printed on the label portions of the sheet, so that the desired indicia is printed on the label portions of the sheets, the tabs are then pushed or pulled up and grasped with a portion of the liner (liner patch) being adhered to the facestock portion of the tab and the label assembly then peeled off of the sheet. The user can then grasp the other opposing tab, which similarly has a liner sheet portion on its back side (alternatively, he can grasp and pull both tabs at the same time). By grasping the two tabs and the liner sheet portions thereof, the user does not contact any adhesive surface. However, he can position the label directly on the desired surface.

Alternatively, he can position the label assembly on a label applicator device.

Preferably, the label assembly is positioned with the adhesive side of the label facing up, the tabs hooked into place, and the CD is then pressed down on a center post of the device into contact with the label for adherence thereto. The CD with the label assembly adhered thereto can be removed from the device and the tabs torn off from the label. Preferably, weakened separation lines provide the tearing lines for the tabs. These are preferably perforated lines passing through the facestock sheet.

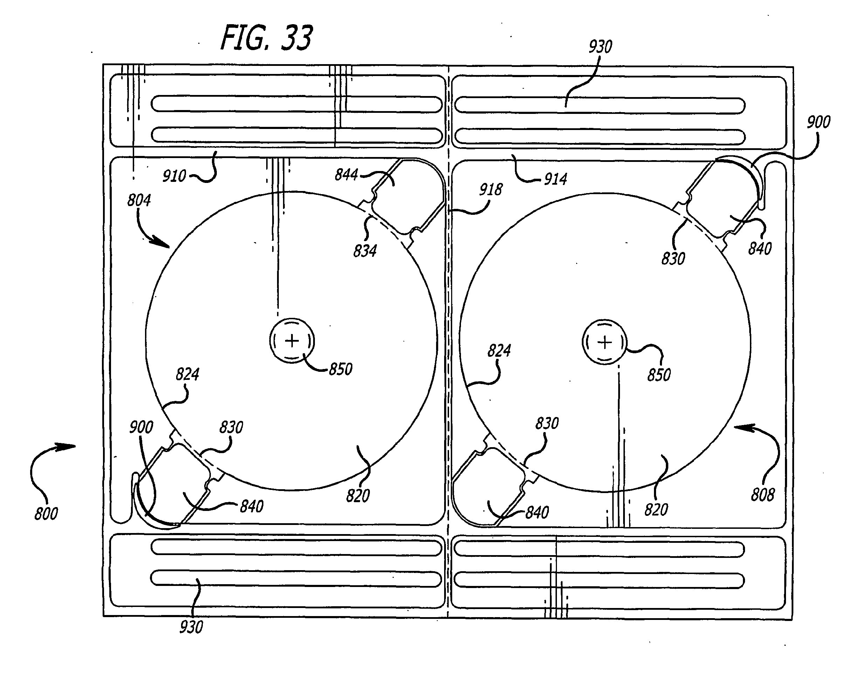

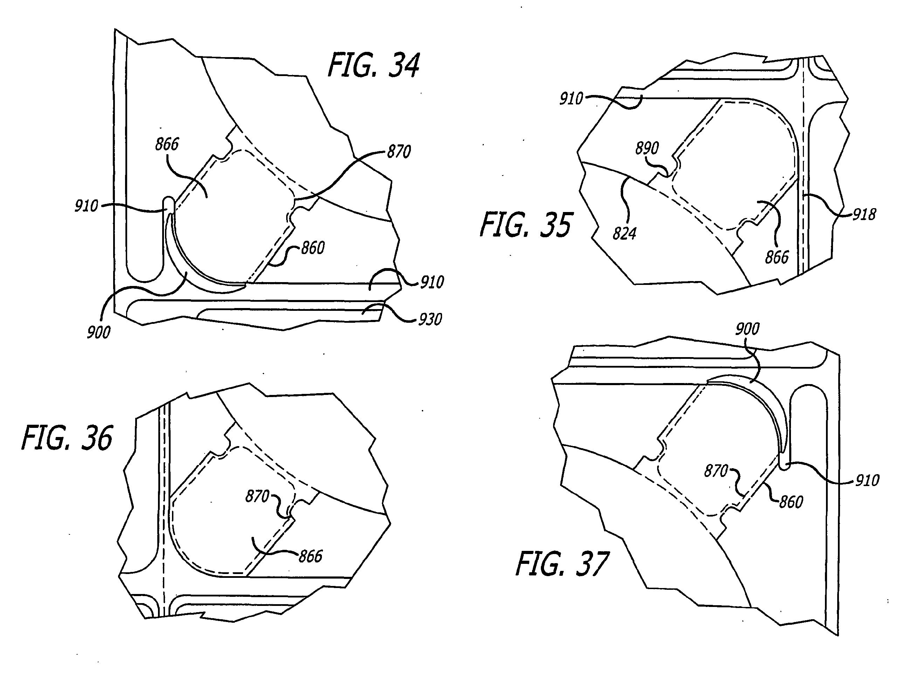

Referring to FIG. 33, a sheet of the present invention is shown generally at 800. It includes two side-by-side label assemblies 804,808. The label assemblies are identical except that one is rotated one hundred and eighty degrees relative to the other one. Both include circular labels 820, with the outside circumferences defined by die-cut lines 824 through the facestock sheet around the entire perimeter except for the two portions 830,834 adjacent the tabs 840, 844. Those arcuate lines 830,834 are formed by perforated lines extending through both the facestock sheet and the liner sheet. The center hole 850 is formed by a die-cut line, and the hole can either be a full face (small) hole or a standard larger hole. The tab portions of the label assemblies, as is shown in FIGS. 34-37, are formed by die-cut lines having ties and cuts 860 through the facestock sheet. All of the tabs have liner sheet patches 866 formed by cut and/or perforated lines 870 through the liner sheet on their back sides. The liner sheet patches have generally the same size and shape as the facestock portion but with slightly smaller dimensions. Each of the tabs has a pair of opposing side notches 890. These notches are provided to help position and hold the labels in place in label applicator devices, as will be shown and discussed later in this disclosure. The notches can have a central tie portion.

Crescent-shaped areas 900 are preferably formed by die-cut lines through the liner sheet at the ends of one of the two tabs of each of the label assemblies. The label sheet has cut lines through the facestock sheet, forming a matrix 910 of horizontal and vertical lanes 914,918 outside of the label assemblies. The crescent patches are attached to this matrix. Thus, the facestock matrix can be pulled off of the sheet before the label sheet is marketed to the user.

This matrix 910 then will pull off the crescent-shaped portions 900 of the liner sheet attached thereto. This leaves crescent-shaped through-holes through the label sheet (and the facestock sheet). This allows the user to insert the tip of his finger from the top of the label sheet, in through the holes to engage the distal ends of one of the tabs and to pull the tab up, grasp and pull the tab, thereby peeling the label assembly 804 (or 808) off of the sheet 800. In other words, the crescent-shaped holes allow the user to easily engage and pull up on the ends of the tabs 840.

Also, die-cut into the face sheet are a plurality of elongate spine labels 930. Eight are shown in the embodiment of FIG. 33. These labels are also conveniently printed in the printer or copier with the user's custom-designed indicia. They are similarly peeled off and applied to the spines of the jewel cases or other storage boxes for the labelled CDs, by the user.

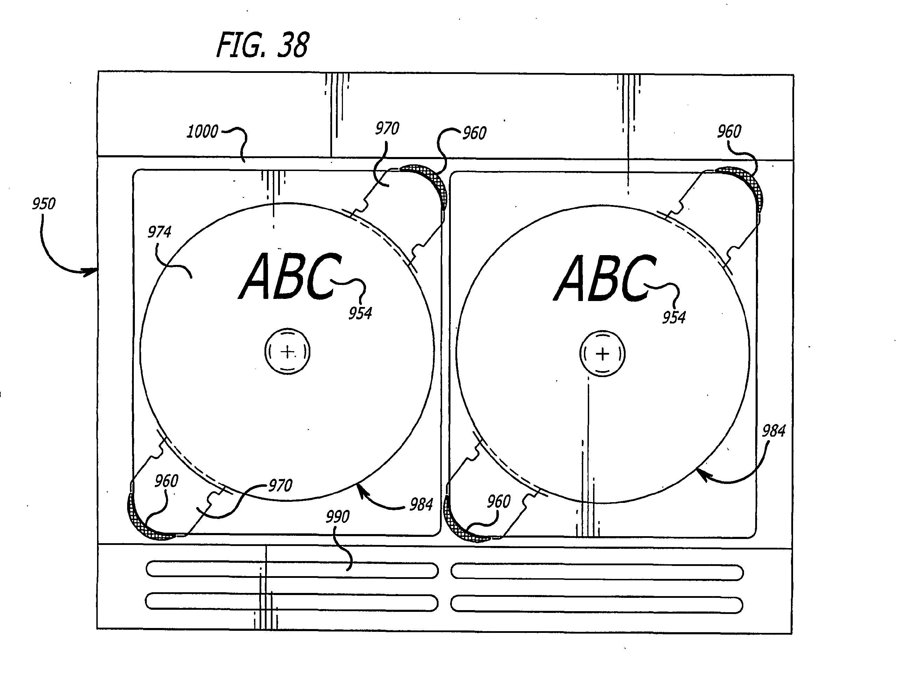

FIG. 38 shows generally at 950 a label sheet of the invention which is a variation of the label sheet of FIG. 33. This label sheet 950 is illustrated as provided to the user and after the user has passed it through a printer or copier to have desired indicia 954 printed thereon. It is seen for this embodiment that the crescent-shaped openings 960 are provided for both tabs 970 of each label 974 of each label assembly 980,984, In contrast, the embodiment of FIG. 33 only provides the crescent-shaped opening for one of the tabs of each of the label assemblies.

Another difference is that only four spine labels 990 are provided. A further difference is the configuration of the removable facestock matrix 1000. As discussed above, when this matrix is removed, the crescent-shaped liner sheet portions are removed therewith to form the openings 960. This is an easy way to remove the crescent-shaped sheet portions without having excess small waste pieces produced. That is, it is a much cleaner and more efficient way of removing the crescent-shaped pieces than simply punching them out.

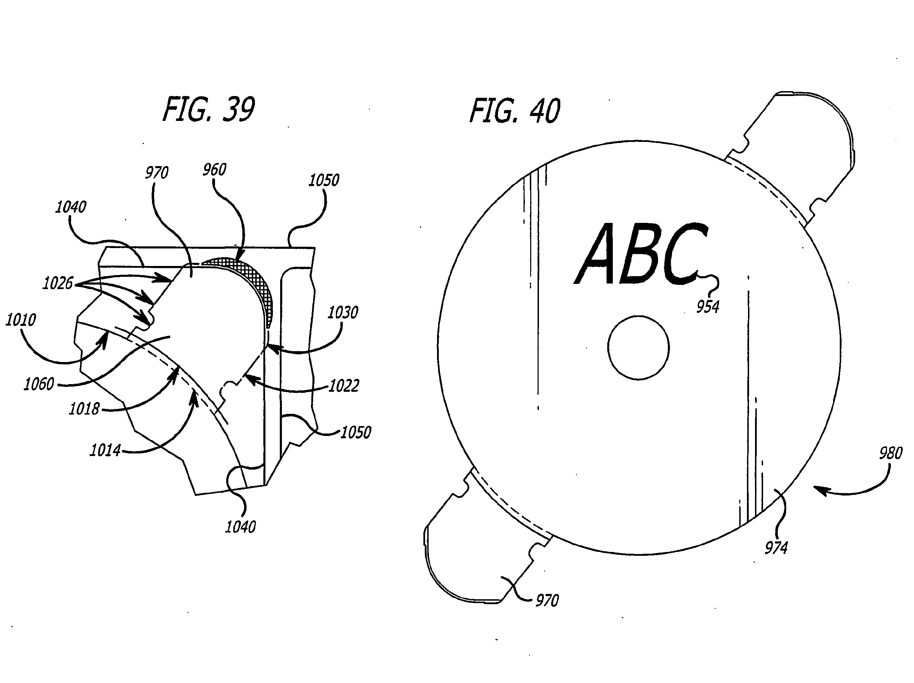

FIG. 39 shows an enlarged view of one of the tabs of the sheet of FIG. 38. It shows the face-cut line 1010 only in the circumference of the label, the microperforation arcuate line 1014 through the facestock sheet. The liner-patch die-cut line 1018 is cut through the liner sheet from the liner side. The sides 1022 of the tabs, which are cut to form ties 1026, are cut through the facestock sheet and the liner sheet from the face side. The corners 1030 are cut through the liner from the liner side, and the crescent-shaped hole 960 is cut through the liner. The side edges 1040,1050 of the face matrix are cut through the facestock sheet. When the face matrix is removed, the crescent-shaped portion of the cut liner, which is adhered thereto with the sheet adhesive, is pulled off and removed with the face matrix 1000 to form the crescent-shaped hole at the end of each of the tabs. For this embodiment, the liner sheet patch 1060 on the rear side of the tabs 970 is the same size as the facestock sheet (front) portion of the tabs.

Referring to FIG. 38, after the printing operation as shown thereon, the user inserts his finger into either one of the crescent-shaped openings 960 for one of the label assemblies 980 or 984 and pulls up on the label assembly, grasping the tab 970 from the front and back and peels the label and opposing tab off of the underlying liner sheet, and the user grasps the opposing tab on both sides thereof between the fingers of his other hand. The label assembly 980 is then as depicted in FIG. 40, ready for insertion on a label applicator device.

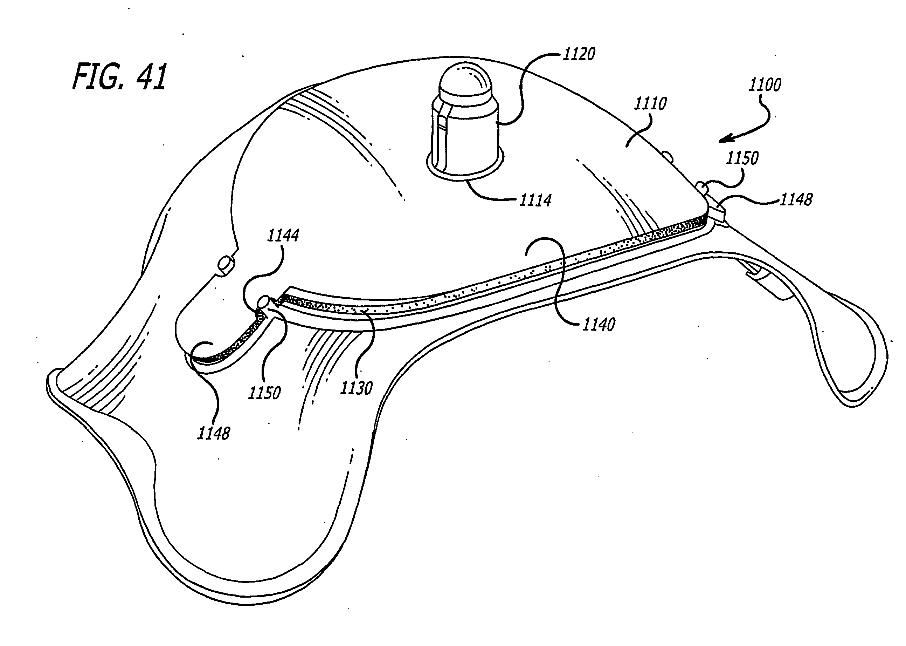

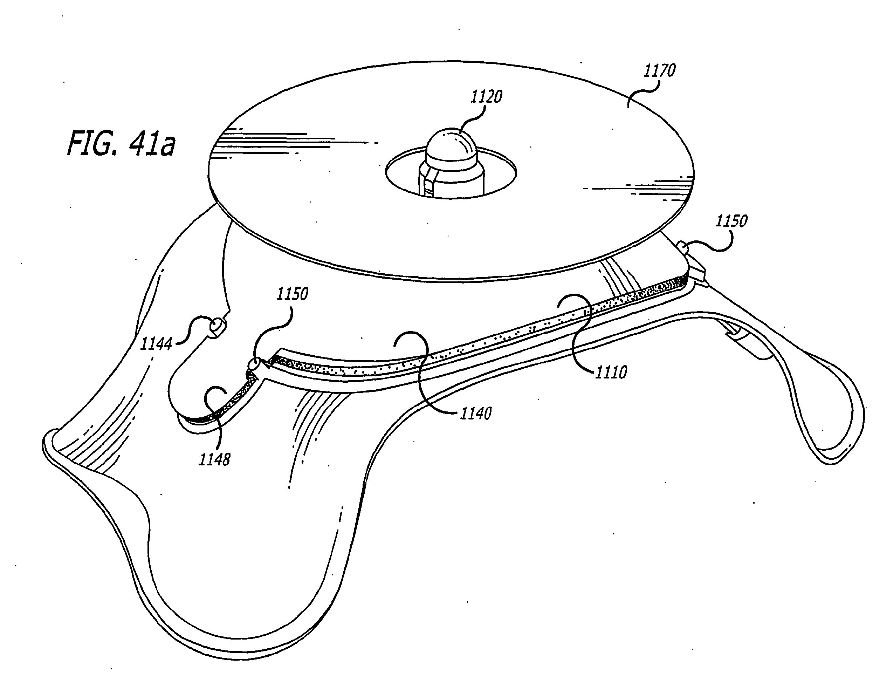

FIG. 41 is a perspective view of a label applicator device shown generally at 1100 with a label assembly 1110 of the present invention in position thereon. It can be seen that the label assembly 1110 is fitted via its central hole onto the central post assembly 1120. The label assembly is held on the soft curved support surface 1130 of the device, adhesive side 1140 up, by the positioning of the tab notches 1144 of the tabs 1148 onto the upright device pins 1150. With the label assembly so positioned the CD 1170 is positioned on the center post 1120 as shown in FIG. 41 a and pressed down onto the label assembly 1100, effectively adhering the label to the disc. That is, the CD 1170 is shown in FIG 41 a in a rest position on the post assembly, ready to be manually pressed down onto the adhesive surface of the label assembly 1170.

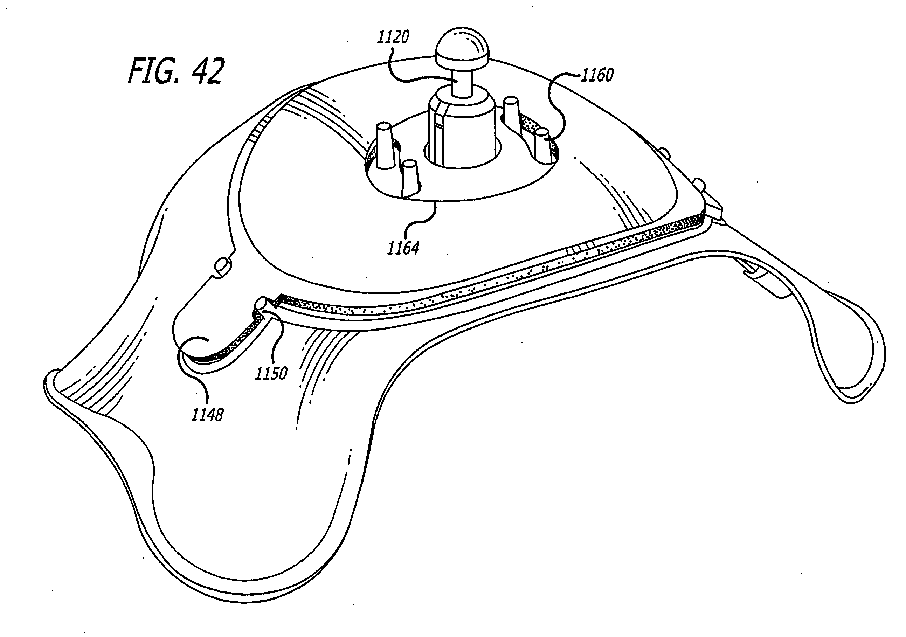

FIG. 42 shows the label applicator device 1100 with the post assembly 1120 raised so that the raised pegs of posts 1160 define a large opening 1164 for a large or regular opening label assembly, as depicted. The raised center pegs 1160 position the center opening of the label and the tabs 1148 are held in place by the pins 1150 engaging in the side notches of the tabs.

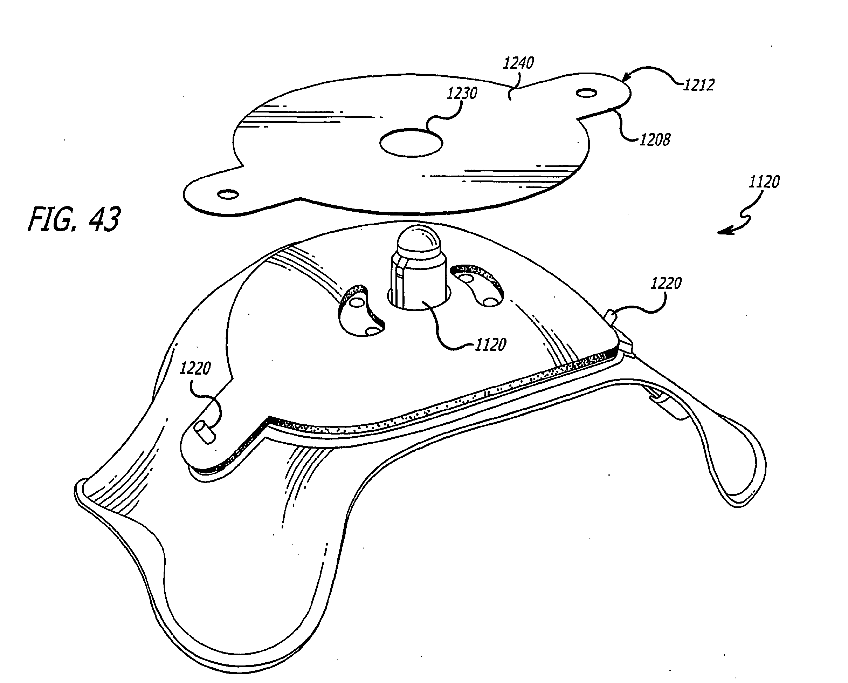

An alternative applicator device 1200 where, instead of notches in the sides of the tabs, the tabs 1208 have center slots or holes 1212 is shown in FIG. 43. These slots or holes 1212 are then positioned on the posts 1220 of the applicator. While the small hole opening 1230 for the embodiment of the label assembly 1240 is shown, this arrangement can also be used for the regular size opening by raising the post assembly as depicted in FIG. 42.

The notch embodiment is preferred over the central hole embodiment (FIG. 43), which may require that the user punch or push out the center dot piece from the tab 1208 to form hole 1212. Also, because it is easier for the user to see the side pins 1150 instead of a central pin 1220, application of the tabs to the device is easier. The pins in either embodiment can keep the label assembly flat during application, minimizing the possibility of creating bubbles. If bubbles are created, they can be squeezed out without forming wrinkles. Additionally, the tabs can be provided with both side notches and central slots to fit on either device.

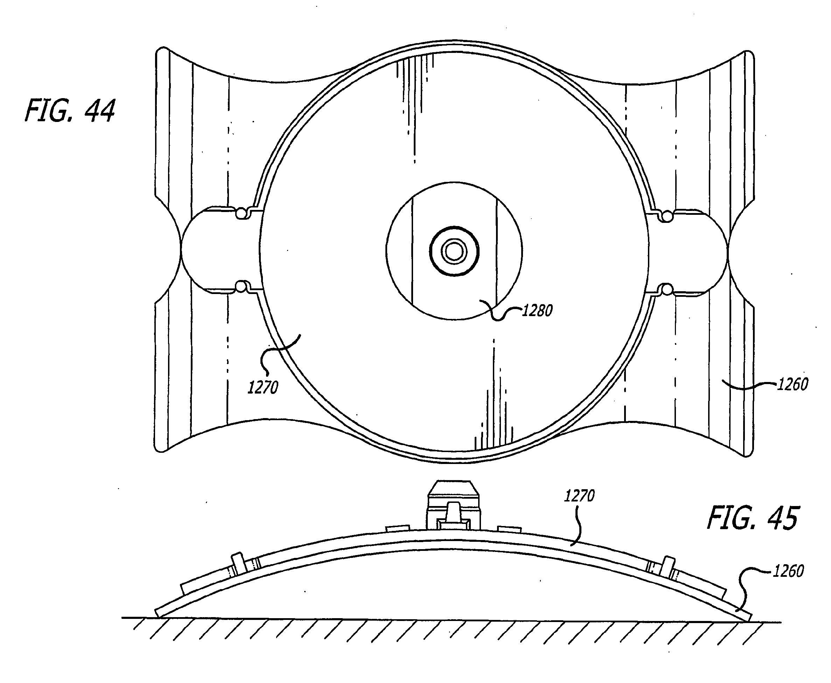

FIGS. 44 and 45 show an alternative label applicator device 1260 which has a different shape and slightly different operation, while employing the same function as the above-described devices, in that as the CD is pressed down, the entire applicator device is compressed down against a return bias. The return bias can be provided by the engineered plastic material of the device and/or by leaf or other springs attached to the bottom surface of the device. The longitudinal curving top surface helps position the label assembly and more effectively apply the label to the CD without wrinkling or bubbles. The label assembly 1270 shown in FIGS. 44 and 45 is a regular size opening label 1280. In contrast, the label assembly of FIGS. 46 and 46a is a small hole label 1290.

FIG. 47 shows an alternative label sheet 1300 where instead of the crescent-shaped opening, a push tab 1310 is formed at the end of one or both of the tabs 1320 of each of the label assemblies. The tab is cut through both the face and the liner around a substantial portion of the perimeter 1330 and the end 1340 of the push tab is cut with a perforated or similar line through the face and/or liner. Spine labels 1350 can also be provided cut into the facestock sheet. The periphery 1360 of the labels 1370 can be die-cut except at arc 137a. And the liner can be cut at line 1378.

FIG. 48 shows an alternative sheet embodiment 1400 where the CD label assembly is located symmetrically on the sheet. Tabs 1410 on either side of the label 1420 are formed. The liner section 1420 of the tab is directly underneath the facestock portion 1430 of the tab so that by pushing the liner section, the facestock section partially separates from the sheet. The facestock section 1430 is attached to the compact disc label 1420 by perforations 1440. Lifting the facestock portion of the tab with the attached liner section of the tab lifts the compact disc label 1420 from the liner sheet. The opposed tab with its liner section can be lifted prior to the removal of the compact disc label 1420 or it can be left in and will pull the section of the opposite tab up during removal.

Referring to FIG. 49, an alternative label sheet embodiment is shown generally at 1500 wherein the alignment tab 1510 which is a perforation cut through both the facestock and the release liner and is separated by a liner cut 1520, is removed along with the (compact disc) label 1524. The tab 1530 is attached to the compact disc label 1524 by a perforation line 1540, and the tab liner section 1544. This label assembly can be handled without contacting the adhesivecoated surface. The alignment tab 1510 can then be used to align the label with the compact disc using the contours of the compact disc jewel case in accordance with U. S. Patent No. 5,715,934,.

This concept incorporates a mirror image of the "hat" concept that is currently used for Laser, Inkjet, and Color Laser CD labels. One purpose of having the second"hat"is to allow users to punch out the "hats" from behind and remove the CD label. A portion of the label (the middle area) has exposed adhesive, while the remainder of the assembly is still in laminate form.

The idea is to place this assembly upside down on a CD applicator and peel back both "hats" simultaneously, so that equal force is applied in opposite directions as the liner sections of the "hats"are removed from the CD label. This allows the CD label to be relatively undisturbed on the applicator while the liner is being removed, with the end goal of having the CD label adhesive side up, with all of the adhesive exposed, never having contacted the adhesive directly with either hand. The CD can then be placed on top of the CD label in the applicator and applied thereto.

An alternate use of this concept would be to use the jewel case as an alignment tool and utilize it as our existing CD labels are used. The first"hat"would be positioned into the appropriate corners of the jewel case, the exposed area of the label would be applied to the CD, and then the"hats"would be removed sequentially or simultaneously. Again, the user would not need to contact an adhesive coated surface during this label application process.

FIGS, 50 and 51 show label assemblies used for business card CD's. The label portion 1550 of the label assembly 1560 of FIG. 50 has rounded ends while the label 1570 of the assembly 1580 of FIG. 51 has square corners 1584, and both have center holes 1590. These different configurations are provided to accommodate and fit on different configurations of business card CD's. It is noted that both of the label assemblies of FIGS. 50 and 51 have the no touch tabs 1600 with notches 1610 and with the liner sheet portion or patch on the back side of the tabs so the user advantageously does not grasp an adhesive surface. These tabs have notches to fit onto centering pegs of label applicator devices, as previously described, or adapted to accommodate CD business cards. Alternatively, they can have central slots or holes. These labels can be shaped to match a variety of business card CD types, as would be apparent to those skilled in the art.

The label sheet 1630 of FIG. 52 is used to provide printed or non-printed jewel case inserts together with the CD label assemblies. The jewel case insert shown at the top of the sheet at 1640 is a 123.825mm x 123.825mm (4.875 by 4.875 inch) square. It is defined by microperforations 1650 through both the face sheet and the liner sheet, with 1.5875mm (0.0625 inch) offsets 1660. The face and backing are both permanent laminations so that they feel like a regular card. In other words, the area 1640 does not have a silicone coating, while the rest of the sheet does have a silicone coating. The tabs 1670 of the single label assembly 1680 both have the cut liner portions 1684 secured to their rear surfaces as previously discussed so that the user does not contact adhesive surface while handling the tabs. Microperfs 1688 in the face sheet separate the tabs from the labels 1690. The center holes 1696 in the labels can be either full face or regular size openings. One or more spine strips can also be provided on the sheet 1630.

FIG. 54 shows generally at 1700 an address label embodiment after removal from a label sheet. The top and side tabs 1710,1714 with liner sheet patches on their back sides are used to align the label 1720 correctly to an envelope (not shown) and then are torn off along their perforation lines 1734. This leaves the adhesive printed or non-printed label correctly positioned and adhered to the envelope.

A license plate label assembly 1750 having a pair of no-touch tabs 1760,1764 extending out from the label 1770 is shown in FIG. 54. These tabs 1760,1764 are aligned to the edge of the license plate, the label 1770 applied and the tabs removed in a process similar to that described with respect to other embodiments herein.

From the foregoing detailed description, it will be evident that there are a number of changes, adaptations and modifications of the present invention which come within the province of those skilled in the art. For example, the labels, instead of being passed through a printer or copier, are written directly thereon by a pencil, pen or the like, or the labels are provided on the sheet with the indicia pre-printed. Or the labels can be unprinted color coded labels. Another alternative is for the labels when on the sheet to not have adhesive thereon but rather to be detached or removed and then attached to an adhesive surface. While one preferred embodiment uses a clear glossy polyester (or film) facestock, an adhesive layer and a paper liner, other materials can be used.

## Claims

1. A label sheet construction including:
a liner sheet;
a facestock sheet releasably adhered with adhesive to the liner sheet;
at least one weakened facestock separation line (824) through the facestock sheet to the liner sheet to define a facestock sheet label (820);
at least one tab weakened line (860) through the facestock sheet to form at least in substantial part a facestock sheet tab (840, 844) extending out from the label;
at least one weakened line (870) through the liner sheet to the facestock sheet and defining a liner sheet patch (866) on a back side of the tab (840, 844);
and the tab (840, 844) and the patch (866) together defining a handle which a user can grasp without grasping the adhesive to remove the label (820) from the liner sheet and to assist in a step of positioning the label on an object to an adhered position thereon, using the adhesive;
**characterised in that** the tab (840, 844) has locating means in the form of a central slot or hole (1212), or opposing side notches (890, 1144, 1610).

2. The construction of claim 1 wherein the step of positioning includes positioning the label (820) on a label applicator such that a pin or pins of the label applicator are disposed in the locating means(890, 1144, 1610, 1212).

3. The construction of claim 1 or 2 wherein the tab (840, 844) and patch (866) are removable from the label (820) along a weakened line which includes cuts and ties.

4. The construction of claim 1, 2 or 3 wherein the tab (840, 844) and patch (866) are constructed to be removable from the label (820) with the label (820) in the adhered position on the object.

5. The construction of any preceding claim wherein the label (820) has a central hole (850).

6. The construction of any preceding claim wherein the object is an optical disc.

7. The construction of any of claims 1 to 5 wherein the object is a business card CD.

8. The construction of any preceding claim further comprising a weakened separation spine label line through the facestock sheet to the liner sheet to define an elongate spine label (930) having an adhesive back surface when removed from the liner sheet.

9. The construction of any preceding claim further comprising a through-opening (900, 960) through the liner sheet and the facestock sheet and adjacent the tab (840, 844).

10. The construction of claim 9 wherein the through-opening (900, 960) is crescent shaped and positioned at a distal end of the tab (840, 844).

11. The construction of any preceding claim wherein the tab defines a first tab (840), the patch defines a first patch (866), and the handle defines a first handle, and further comprising the facestock sheet including a second tab (844), the liner sheet including a second patch (866) on a back side of the second tab (844), and the second tab and the second patch together defining a second handle releasably attached to the label (820).

12. The construction of any preceding claim wherein the label defines a first label, the tab defines a first tab, the patch defines a first patch, the handle defines a first handle, the facestock sheet includes a second label and a second tab, the liner sheet includes a second patch on a back side of the second tab, and the second tab and the second patch together defining a second handle releasably attached to the second label.

13. The construction of any preceding claim further comprising a weakened separation on the facestock sheet and defining a card with an adhesive back and separable from the liner sheet and adapted to be adhered to a jewel case.

14. A label application method including:
grasping a handle of a label assembly;
the label assembly including a facestock label (820), a facestock tab (840, 844) extending out from the label, adhesive on a back side of the label, a liner patch (866) adhered to a back side of the tab, and the tab and the patch together forming the handle;
and positioning the label generally on a support surface of a label applicator (1100) with the adhesive side of the label disposed upwardly;
**characterised in that**:
the tab (840, 844) includes locating means in the form of a central slot or hole (1212), or opposing side notches (890, 1144, 1610);
and the positioning includes positioning the tab (840, 844) such that a structure or structures of the label applicator are disposed in the locating means (890, 1144, 1610, 1212).

15. The method of claim 14 further comprising with the label and tab (840, 844) in position on the label applicator, positioning a desired object on the adhesive side to thereby adhere the label to the object to an adhered position.

16. The method of claim 14 or 15 further comprising with the label in the adhered position, separating the handle from the label.

17. The method of any of claims 14 to 16 wherein the positioning includes the tab (840, 844) being attached to the label with cuts and ties, and the separating includes breaking the ties.

18. The method of any of claims 14 to 16 wherein the object is an optical disc having a disc through-hole, the label has a label through-hole (850) and the adhered position includes the disc through-hole and the label through-hole being aligned.

19. The method of any of claims 14 to 16 wherein the or each structure includes a pin or pins (1150), and the tab (840, 844), the liner patch, the handle, the locating means (890, 1144, 1610, 1212) and the pins define respectively, a first tab, a first liner patch, a first handle, first side notches and first pins;
wherein the label assembly includes a second tab extending out from the label, a second liner patch adhered to a back side of the second tab, and the second tab and the second patch together forming a second handle;
and wherein the positioning includes positioning the second tab such that second pin or pins of the label applicator are disposed in the second locating means.

20. The method of claim 19 wherein the grasping includes grasping the second handle.

21. The method of any of claims 14 to 20 further comprising before the grasping, the label assembly being part of a label sheet construction including a facestock sheet and a liner sheet adhered with adhesive to the back of the facestock sheet, and the label sheet construction including a through-hole (900, 960) adjacent the tab (840, 844), and the grasping including inserting a finger tip in the through-hole and peeling the label assembly off of the label sheet construction.

## Patentansprüche

1. Etikettblattkonstruktion umfassend:
ein Kaschierblatt;
ein mittels Klebstoff am Kaschierblatt lösbar haftendes Facestock-Blatt;
mindestens eine geschwächte Facestoclc-Trennlinie (824), die durch das Facestock-Blatt hindurch zum Kaschierblatt geht und ein Facestock-Blatt-Etikett (820) definiert;
mindestens eine Reiter-geschwächte Linie (860), die durch das Facestock-Blatt hindurchgeht, um mindestens weitgehend einen vom Etikett aus sich erstreckenden Facestock-Blatt-Reiter (840, 844) zu bilden;
mindestens eine geschwächte Linie (870), die durch das Kaschierblatt hindurch zum Facestock-Blatt geht und ein Kaschierblatt-Pflaster (866) auf einer Rückseite des Reiters (840, 844) definiert;
und wobei der Reiter (840, 844) und das Pflaster (866) zusammen einen Handgriff definieren, den ein Benutzer ergreifen kann, ohne den Klebstoff anzufassen, um das Etikett (820) vom Kaschierblatt zu entfernen und in einem Schritt zu helfen, das Etikett auf einem Gegenstand in einer darauf befindlichen Haftposition mittels des Klebstoffs zu positionieren,
**dadurch gekennzeichnet, dass** der Reiter (840, 844) Ortungsmittel in Form eines zentralen Schlitzes oder Loches (1212) oder in Form von entgegengesetzten Seitenkerben (S90,1144.1610) aufweist.

2. Konstruktion nach Anspruch 1, wobei der Schritt des positionierens das Positionieren des Etiketts (820) auf einem Etikett-Applizierer beinhaltet, derart, dass ein Stift oder Stifte des Etikettapplizierers in den Ortungsmitteln (890, 1144, 1610, 1212) angeordnet werden.

3. Konstruktion nach Anspruch 1 oder 2, wobei der Reiter (840, 844) und das Pflaster (866) entlang einer geschwächten Linie, die Aufschnitte und Bindungen beinhaltet, vom Etikett (820) entfernbar sind.

4. Konstruktion nach Anspruch 1, 2 oder 3, wobei der Reiter (840, 844) und das Pflaster (866) so konstruiert sind, dass sie vom Etikett (820) entfernbar sind, wenn sich das Etikett in der Haftposition auf dem Gegenstand befindet.

5. Konstruktion nach einem der vorhergehenden Ansprüche, wobei das Etikett (820) ein zentrales Loch (850) aufweist.

6. Konstruktion nach einem der vorhergehenden Ansprüche, wobei der Gegenstand eine optische Platte ist.

7. Konstruktion nach einem der Ansprüche 1 bis 5, wobei der Gegenstand eine Geschäftskarten-CD ist.

8. Konstruktion nach einem der vorhergehenden Ansprüche, ferner umfassend eine durch das Facestock-Blatt hindurch zum Kaschierblatt gehende geschwächte Rückenetikettlinie, um ein längliches Rückenetikett (930) mit einer klebenden Rückfläche zu definieren, wenn dieses vom Kaschierblatt entfernt wird.

9. Konstruktion nach einem der vorhergehenden Ansprüche, ferner umfassend eine Durchgangsöffnung (900, 960), die durch das Kaschierblatt und das Facestock-Blatt und neben dem Reiter (840, 844) hindurchgeht.

10. Konstruktion nach Anspruch 9, wobei die Durchgangsöffnung (900, 960) halbmondförmig ist und an einem entfernten Ende des Reiters (840, 844) positioniert ist.

11. Konstruktion nach einem der vorhergehenden Ansprüche, wobei der Reiter einen ersten Reiter (840), das Pflaster ein erstes Pflaster (866) und der Handgriff einen ersten Handgriff definiert, und wobei ferner das Facestock-Blatt einen zweiten Reiter (844), das Kaschierblatt ein zweites Pflaster (866) auf der Rückseite des zweiten Reiters (844) umfasst und der zweite Reiter und das zweite Pflaster zusammen einen zweiten Handgriff definieren, der lösbar am Etikett (820) befestigt ist.

12. Konstruktion nach einem der vorhergehenden Ansprüche, wobei das Etikett ein erstes Etikett, der Reiter einen ersten Reiter, das Pflaster ein erstes Pflaster, der Handgriff einen ersten Handgriff definiert, das Facestock-Blatt ein zweites Etikett und einen zweiten Reiter beinhaltet, das Kaschierblatt ein zweites Pflaster auf der Rückseite des zweiten Reiters beinhaltet, und der zweite Reiter und das zweite Pflaster zusammen einen zweiten Handgriff definieren, der lösbar am zweiten Etikett befestigt ist.

13. Konstruktion nach einem der vorhergehenden Ansprüche, ferner umfassend eine geschwächte Trennung am Facestock-Blatt, die eine Karte mit einem Haftrücken definiert, die vom Kaschierblatt abgetrennt und auf das Ankleben an einen Schmuckkasten angepasst ist.

14. Etikettapplizierverfahren beinhaltend:
Ergreifen eines Handgriffs einer Etikettanordnung;
die Etikettanordnung beinhaltend ein Facestock-Etikett (820), einen vom Etikett aus sich erstreckenden Facestock-Reiter (840, 844), Klebstoff auf der Rückseite des Etiketts, ein an einer Rückseite des Reiters anhaftendes Kaschierpflaster (866), und wobei der Reiter und das Pflaster zusammen den Handgriff bilden;
und Positionieren des Etiketts allgemein auf einer Auflagefläche eines Etikettapplizierers (1100), wobei die Haftseite des Etiketts nach oben weisend angeordnet ist;
**dadurch gekennzeichnet, dass**
der Reiter (840, 844) Ortungsmittel in Form eines zentralen Schlitzes oder Loches (1212) oder in Form von Seitenkerben (890, 1144, 1610) beinhaltet;
und das Positionieren das Positionieren des Reiters (840, 844) beinhaltet, derart, dass Strukturen des Etikettapplizierers in den Ortungsmitteln (890, 1144, 1610, 1212) angeordnet sind.

15. Verfahren nach Anspruch 14, ferner umfassend, wenn das Etikett und der Reiter (840, 844) auf dem Etikettapplizierer in Position sind, das Positionieren eines gewünschten Gegenstands auf der Haftseite, um **dadurch** das Etikett an dem Gegenstand in einer Haftposition anzukleben.

16. Verfahren nach einem der Ansprüche 14 oder 15, ferner umfassend, wenn das Etikett in der Haftposition ist, das Abtrennen des Handgriffs vom Etikett.

17. Verfahren nach einem der Ansprüche 14 bis 16, wobei das Positionieren das Befestigen des Reiters (840, 844) am Etikett mit Schlitzen und Riegeln, und das Abtrennen das Durchbrechen der Riegel beinhaltet.

18. Verfahren nach einem der Ansprüche 14 bis 16, wobei der Gegenstand eine optische Platte ist, die ein Platten-Durchgangsloch aufweist, das Etikett ein Etikett-Durcligangsloch (850) aufweist, und die Haftposition beinhaltet, dass das Platten-Durchgangslocli und das Etikett-Durchgangsloch aufeinander ausgerichtet sind.

19. Verfahren nach einem der Ansprüche 14 bis 16, wobei die Strukturen oder jede Struktur einen Stift oder Stifte (1150) beinhaltet, und der Reiter (840, 844), das Kaschierpflaster, der Handgriff, die Ortungsmittel (890, 1144, 1610, 1212) und die Stifte einen ersten Reiter, ein erstes Kaschierpflaster, einen ersten Handgriff, erste Seitenkerben bzw. erste Stifte definieren;
wobei die Etikeitanordnung einen vom Etikett aus sich erstreckenden zweiten Reiter, ein an einer Rückseite des zweiten Reiters anhaftendes zweites Kaschietpftaster beinhalten, und der zweite Reiter und das zweite Pflaster zusammen einen zweiten Handgriff bilden;
und wobei das Positionieren das Positionieren des zweiten Reiters beinhaltet, derart, dass der zweite Stift oder die Stifte des Etikettapplizierers in den zweiten Ortungsmitteln angeordnet sind,

20. Verfahren nach Anspruch 19, wobei das Ergreifen das Ergreifen des zweiten Handgiffs beinhaltet.

21. Verfahren nach einem der Ansprüche 14 bis 20, ferner umfassend vor dem Ergreifen, dass die Etikettanordnung Teil einer Etikettblattaliordnulig einschließlich eines Facestock-Blatts und eines Kaschierblatts ist, das mit Klebstoff auf der Rückseite des Facestock-Blatts befestigt ist, und dass die Etikettanordnung ein Durchgangsloch (900, 960) neben dem Reiter (840, 844) beinhaltet, und das Ergreifen das Einführen einer Fingerspitze in das Durchgangsloch und das Abziehen der Etikettanordnung von der Etikettblattkonstruktion beinhaltet.

## Revendications

1. Construction de feuille d'étiquette comprenant:
une feuille de pellicule de revêtement;
une feuille de pellicule frontale collée de manière détachable avec de l'adhésif à la feuille de pellicule de revêtement;
au moins une ligne de séparation de pellicule frontale affaiblie (824) traversant la feuille de pellicule frontale jusqu'à la feuille de pellicule de revêtement pour définir une étiquette de feuille de pellicule frontale (820);
au moins une ligne d'onglet affaiblie (860) à travers la feuille de pellicule frontale pour former au moins en partie substantielle un onglet de feuille de pellicule frontale (840, 844) qui s'étend en dehors de l'étiquette;
au moins une ligne affaiblie (870) traversant la feuille de pellicule de revêtement jusqu'à la feuille de pellicule frontale et définissant un patch de feuille de pellicule de revêtement (866) sur la face arrière de l'onglet (840, 844);
et l'onglet (840, 844) et le patch (866) définissant ensemble une poignée qu'un utilisateur peut saisir sans saisir l'adhésif pour retirer l'étiquette (820) de la feuille de pellicule de revêtement et pour assister dans une étape de positionnement de l'étiquette sur un objet à une position collée sur celui-ci; en utilisant l'adhésif;
**caractérisée en ce que** l'onglet (840, 844) a des moyens de localisation ayant la forme d'une fente ou d'un trou central(e) (1212), ou d'encoches de bords se faisant face (890, 1144, 1610).

2. Construction selon la revendication 1, dans laquelle l'étape de localisation comprend le positionnement de l'étiquette (820) sur un applicateur d'étiquette de sorte qu'une broche ou des broches de l'applicateur d'étiquette soient disposées dans les moyens de localisation (890, 1144, 1610, 1212).

3. Construction selon l'une des revendications 1 ou 2, dans laquelle l'onglet (840, 844) et le patch (866) peuvent être retirés de l'étiquette (820) le long d'une ligne affaiblie qui comprend des découpes et des liaisons.

4. Construction selon l'une des revendications 1, 2 ou 3, dans laquelle l'onglet (840, 844) et le patch (866) sont construits pour pouvoir être retirés de l'étiquette (820) avec l'étiquette (820) dans la position collée sur l'objet.

5. Construction selon l'une quelconque des revendications précédentes, dans laquelle l'étiquette (820) a un trou central (850).

6. Construction selon l'une quelconque des revendications précédentes, dans laquelle l'objet est un disque optique.

7. Construction selon l'une quelconque des revendications 1 à 5, dans laquelle l'objet est un CD de cartes de visite.

8. Construction selon l'une quelconque des revendications précédentes comprenant en outre une ligne d'étiquette dorsale de séparation affaiblie traversant la feuille de pellicule frontale jusqu'à la feuille de pellicule de revêtement pour définir une étiquette dorsale allongée (930) ayant une surface arrière adhésive quand retirée de la feuille de pellicule de revêtement.

9. Construction selon l'une quelconque des revendications précédentes comprenant en outre une ouverture de passage (900, 960) à travers la feuille de pellicule de revêtement et la feuille de pellicule frontale et adjacente à l'onglet (840, 844).

10. Construction selon la revendication 9, dans laquelle l'ouverture de passage (900, 960) a la forme d'un croissant et est positionnée à une extrémité distale de l'onglet (840, 844).

11. Construction selon l'une quelconque des revendications précédentes, dans laquelle l'onglet définit un premier onglet (840), le patch définit un premier patch (866), et la poignée définit une première poignée, et comprenant en outre une feuille de pellicule frontale comprenant un second onglet (844), la feuille de pellicule de revêtement comprenant un second patch (866) sur la face arrière du second onglet (844), avec le second onglet et le second patch définissant ensemble une seconde poignée attachée de manière retirable à l'étiquette (820).

12. Construction selon l'une quelconque des revendications précédentes, dans laquelle l'étiquette définit une première étiquette, l'onglet définit un premier onglet, le patch définit un premier patch, la poignée définit une première poignée, la feuille de pellicule frontale comprend une seconde étiquette et un second onglet, la feuille de pellicule de revêtement comprend un second patch sur la face arrière du second onglet, avec le second onglet et le second patch définissant ensemble une second poignée attachée de manière retirable à la seconde étiquette.

13. Construction selon l'une quelconque des revendications précédentes comprenant en outre une séparation affaiblie sur la feuille de pellicule frontale et définissant une carte avec un arrière adhésif et séparable de la feuille de pellicule de revêtement et apte pour être collée sur un boîtier.

14. Méthode d'application d'étiquette comprenant:
le fait de saisir une poignée d'un assemblage d'étiquette;
l'assemblage d'étiquette comprenant une feuille de pellicule frontale (820), un onglet de feuille de pellicule frontale (840, 844) s'étendant en dehors de l'étiquette, de l'adhésif sur la face arrière de l'étiquette, un patch de feuille de pellicule de revêtement (866) collé sur la face arrière de l'onglet, avec l'onglet et le patch formant ensemble la poignée;
et le positionnement de l'étiquette généralement sur une surface de support d'un applicateur d'étiquette (1100) avec la face adhésive de l'étiquette disposée vers le haut;
**caractérisée en ce que**:
l'onglet (840, 844) comprend des moyens de localisation sous la forme d'une fente ou d'un trou central(e) (1212), ou d'encoches de bords se faisant face (890, 1144, 1610);
et le positionnement comprend le fait de positionner l'onglet (840, 844) de sorte qu'une structure ou des structures de l'applicateur d'étiquette soient disposées dans les moyens de localisation (890, 1144, 1610, 1212).

15. Méthode selon la revendication 14 comprenant en outre, avec l'étiquette et l'onglet (840, 844) en position sur l'applicateur d'étiquette, le fait de positionner un objet désiré sur le côté adhésif pour coller par ce moyen l'étiquette sur l'objet à une position collée.

16. Méthode selon la revendication 14 ou 15 comprenant en outre, avec l'étiquette dans la position collée, la séparation de la poignée de l'étiquette.

17. Méthode selon l'une quelconque des revendications 14 à 16, dans laquelle le positionnement comprend le fait que l'onglet (840, 844) soit attachée à l'étiquette avec des découpes et des liaisons, et la séparation comprend le fait de rompre les liaisons.

18. Méthode selon l'une quelconque des revendications 14 à 16, dans laquelle l'objet est un disque optique ayant un orifice de passage de disque, l'étiquette a un orifice de passage d'étiquette (850) et la position collée comprend le fait que l'orifice de passage de disque et l'orifice de passage d'étiquette soient alignés.

19. Méthode selon l'une quelconque des revendications 14 à 16, dans laquelle la ou chaque structure comprend une broche ou des broches (1150), et l'onglet (840, 844), le patch de pellicule de revêtement, la poignée, les moyens de localisation (890, 1144, 1610, 1212) et les broches définissent respectivement, un premier onglet, un premier patch de pellicule de revêtement, une première poignée, des premières encoches latérales et des premières broches;
dans laquelle l'assemblage d'étiquette comprend un second onglet qui s'étend en dehors de l'étiquette, un second patch de pellicule de revêtement collé à une face arrière du second onglet, avec le second onglet et le second patch formant ensemble une seconde poignée;
et dans laquelle le positionnement comprend le fait de positionner le second onglet de sorte que la(les) seconde(s) broche(s) de l'applicateur d'étiquette soient disposées dans les seconds moyens de localisation.

20. Méthode selon la revendication 19 dans laquelle la saisie comprend le fait de saisir la seconde poignée.

21. Méthode selon l'une quelconque des revendications 14 à 20 comprenant en outre, avant la saisie, le fait que l'assemblage d'étiquette fait partie d'une construction de feuille d'étiquette comprenant une feuille de pellicule frontale et une feuille de pellicule de revêtement collée avec de l'adhésif à l'arrière de la feuille de pellicule frontale, et que la construction de feuille d'étiquette comprend un orifice de passage (900, 960) adjacent à l'onglet (840, 844), et que la saisie comprend le fait d'insérer la pointe d'un doigt dans l'orifice de passage et de décoller l'assemblage d'étiquette de la construction de feuille d'étiquette.
